(19) Europäisches Patentamt
European Patent Office
Office européen des brevets

(11) EP 1 017 728 B1

(12) **EUROPÄISCHE PATENTSCHRIFT**

(45) Veröffentlichungstag und Bekanntmachung des Hinweises auf die Patenterteilung:
**26.02.2003 Patentblatt 2003/09**

(21) Anmeldenummer: **98945264.4**

(22) Anmeldetag: **19.08.1998**

(51) Int Cl.⁷: **C08F 4/00**, C08F 2/22, C08L 57/00

(86) Internationale Anmeldenummer:
**PCT/EP98/05272**

(87) Internationale Veröffentlichungsnummer:
**WO 99/011674 (11.03.1999 Gazette 1999/10)**

(54) **VERFAHREN ZUR HERSTELLUNG VON PARTIKELFÖRMIGEN POLYMERISATEN UNTER MITVERWENDUNG EINES STABILEN N-OXYL-RADIKALS**

METHOD FOR PRODUCING PARTICULATE POLYMERS BY ADDITIONALLY USING A STABLE N-OXYL RADICAL

PROCEDE DE PRODUCTION DE POLYMERISATS SOUS FORME DE PARTICULES AVEC CO-UTILISATION D'UN RADICAL N-OXYLE STABLE

(84) Benannte Vertragsstaaten:
**AT BE CH DE DK ES FI FR GB IT LI NL SE**

(30) Priorität: **01.09.1997 DE 19738081**

(43) Veröffentlichungstag der Anmeldung:
**12.07.2000 Patentblatt 2000/28**

(73) Patentinhaber: **BASF AKTIENGESELLSCHAFT**
**67056 Ludwigshafen (DE)**

(72) Erfinder:
- **FISCHER, Michael**
  **D-67071 Ludwigshafen (DE)**
- **MC KEE, Graham, Edmund**
  **D-67433 Neustadt (DE)**
- **SUTORIS, Heinz, Friedrich**
  **D-67227 Frankenthal (DE)**

(74) Vertreter: **Kinzebach, Werner, Dr. et al**
**Ludwigsplatz 4**
**67059 Ludwigshafen (DE)**

(56) Entgegenhaltungen:
**EP-A- 0 135 280** **WO-A-94/11412**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Herstellung von partikelförmigen Polymerisaten P durch radikalisch initiierte wäßrige Emulsionspolymerisation, bei dem wenigstens ein ethylenisch ungesättigtes Monomer mittels Dispergiermittel in wäßrigem Medium emulgiert und mittels eines radikalischen Polymerisationsinitiators im Beisein eines stabilen N-Oxyl-Radikals polymerisiert wird, wobei eine wässrige Polymerisatdispersion entsteht.

Weiterhin betrifft die Erfindung die nach dem Verfahren erhaltenen partikelförmigen Polymerisate P, sowie thermoplastische Formmassen F, enthaltend u. a. die Polymerisate P. Schließlich betrifft die Erfindung ein Verfahren zur Herstellung der thermoplastischen Formmassen F, die Verwendung der Polymerisate P als Zusatz zu thermoplastischen Formmassen, die Verwendung der Formmassen F zur Herstellung von Formkörpern und Folien, und Formkörper und Folien aus diesen Formmassen.

Partikelförmige Polymerisate werden beispielsweise als Bestandteil wässriger Polymerisatdispersionen, wie sie in Anstrichfarben oder in Lederbeschichtungsmassen enthalten sind, verwendet. Weiterhin sind partikelförmige Polymerisate Bestandteil von thermoplastischen Formmassen und dienen dann beispielsweise als Mattierungsmittel oder zur Verbesserung der mechanischen Eigenschaften. Bestimmte partikelförmigen Polymerisate verbessern insbesondere die Schlagzähigkeit spröder Thermoplaste wie z.B. Polystyrol PS, Polystyrolacrylnitril PSAN, Polyvinylchlorid PVC, Polybutylenterephthalat PBT und Polymethylmethacrylat PMMA.

Um zu schlagzähen, thermoplastischen Formmassen zu gelangen, gibt man beispielsweise teilchenförmige Pfropfkautschuke zu den bei Raumtermperatur spröden Polymerisaten, welche die Matrix bilden. Die Herstellung teilchenförmiger Pfropfpolymerisate aus einem kautschukelastischen Kern, d.h. einem weichen Polymeren mit einer Glasüberganstemperatur Tg von unter 0°C, und einer harten Pfropfhülle mit einer Glasübergangstemperatur von über 25°C z.B. durch Emulsionspolymerisation, ist bekannt. Hierzu wird zunächst durch Emulsionspolymerisation geeigneter Monomerer eine Pfropfgrundlage hergestellt. Die Monomeren, die die Pfropfhülle bilden sollen, werden dann in Gegenwart der Pfropfgrundlage polymerisiert. Dabei werden die Monomeren für die äußerste Pfropfhülle so gewählt, daß diese mit dem zu modifizierenden Thermoplasten verträglich oder teilverträglich ist. Die Herstellung solcher Schlagzähmodifier ist seit langem bekannt und z.B. in der DE 1 260 135, DE 2 826 925 beschrieben.

Oftmals reicht jedoch der zähigkeitssteigernde Effekt durch Verwendung solcher partikulären Modifier, insbesondere bei tiefen Temperaturen, nicht für technische Anwendungen aus, da in vielen Fällen die Anbindung zwischen den Hart- und den Weichsegmenten des Modifiers wegen ihrer geringen Verträglichkeit nicht optimal ausgebildet ist. Dies trifft z.B. für Kern/Schale-Kautschuke zu, wie sie durch übliche Emulsionspolymerisation erhalten werden, die aus einem harten PS-Kern, einer ersten weichen Phase aus Poly(n-butylacrylat) und einer äußeren Pfropfhülle aus PSAN aufgebaut sind. Es werden deshalb sogenannte pfropfaktive Comonomere wie Allylmethacrylat oder Dihydrodicyclopentadienylacrylat verwendet, die die Pfropfung verbessern und auch zu einer zusätzlichen Vernetzung des Polymerisats führen, was in vielen Fällen erwünscht ist, jedoch auch nachteilig sein kann.

Die Herstellung partikelförmiger Polymerisate erfolgt meist durch radikalisch initiierte wäßrige Emulsionspolymerisation von wenigstens eine ethylenisch ungesättigte Gruppe aufweisenden Monomeren bei unterhalb 100°C liegenden Temperaturen. Dabei werden die zu polymerisierenden Monomeren, die überwiegend nur wenig wasserlöslich sind, ohne größeren Verteilungsaufwand, z.B. durch übliches Rühren, unter Zusatz von Dispergiermittel im wäßrigen Medium emulgiert und durch die Einwirkung radikalischer Polymerisationsinitiatoren polymerisiert.

Bei den radikalischen Polymerisationsinitiatoren handelt es sich üblicherweise um in Wasser lösliche Peroxide, Hydroperoxide und/oder Azoverbindungen, die, oberhalb einer bestimmten Temperatur, die in der Regel ≤ 100°C beträgt, in reaktive Radikale zerfallen, die die Polymerisation auslösen.

Der Begriff Emulsion drückt aus, daß die Monomeren und das Wasser als ein System von zwei nur wenig ineinander löslichen Flüssigkeiten vorliegt, in dem die Flüssigkeiten in mehr oder weniger feiner Verteilung vorliegen. Die Kennzeichnung wäßrige Emulsion drückt aus, daß die wäßrige Phase die kontinuierliche Phase bildet. Zur Herstellung einer wäßrigen Monomerenemulsion bedarf es normalerweise des Zusatzes von Dispergiermitteln (z.B. Ullmanns Encyklopädie der technischen Chemie, Bd. 10, 4. Auflage, Verlag Chemie, Weinheim (1975), S. 449), die die unmittelbare Vereinigung von zwei zufällig zusammenstoßenden Monomerentröpfchen in der wäßrigen Emulsion unterbinden und die Stabilität der resultierenden wäßrigen Polymerisatdispersion gewährleisten.

Infolge des geringen Verteilungsaufwandes besteht die bei der radikalischen wäßrigen Emulsionspolymerisation eingesetzte wäßrige Monomerenemulsion üblicherweise hauptsächlich aus Monomerentröpfchen eines Durchmessers > 1 μm.

Wie alle radikalisch initiierten Polymerisationen von wenigstens eine ethylenisch ungesättigte Gruppe aufweisenden Monomeren weist auch das Verfahren der radikalisch initiierten wäßrigen Emulsionspolymerisation den Nachteil auf, daß das Molekulargewicht der Polymerketten mit dem Polymerisationsumsatz normalerweise nicht zunimmt und daß die Polymerketten des resultierenden Polymerisats in der Regel kein einheitliches Molekulargewicht aufweisen. D.h., das erhältliche Polymerisat ist bezüglich der Eigenschaft Molekulargewicht in der Regel nicht monodispers, sondern weist üblicherweise einen diesbezüglichen Polydispersitätsindex PDI von ≥ 2 auf (PDI = $\overline{M}_w/\overline{M}_n$,

mit $\overline{M}_w$ = gewichtsmittleres Molekulargewicht und $\overline{M}_n$ = zahlenmittleres Molekulargewicht). Dies ist vermutlich insbesondere auf Abbruchreaktionen infolge irreversibler Kombination wachsender freier radikalischer Polymerisatkettenenden sowie auch auf Kettenübertragungsreaktionen, Disproportionierung und Eliminierung, zurückzuführen.

Ein weiterer Nachteil der radikalisch initiierten wäßrigen Emulsionspolymerisation besteht darin, daß ein während der Polymerisation durchgeführter Wechsel der zu polymerisierenden Monomeren in der Regel nicht zu segmentierten Copolymerisaten (Blockpolymerisaten), sondern im Normalfall allenfalls zu Kern-Schale-Polymerteilchen führt, deren Kern aus der einen und deren Schale aus der anderen Monomerensorte aufgebaut ist, wobei Kern und Schale im wesentlichen nicht chemisch sondern lediglich physikalisch aneinander gebunden sind. Die Phasenanbindung der Schale an den Kern meist demnach unzureichend.

Aus TRIPS Vol. 4, No. 6, June 1996, S. 183 ff, US-A 5,322,912, WO 96/24620, US-A-4,581,429, US-A 5,412,047. EP-A 135 280 sowie aus der älteren Anmeldung DE-A 19602539 ist bekannt, daß die Durchführung von radikalisch initiierten Polymerisationen bei oberhalb 100°C liegenden Temperaturen im Beisein eines stabilen (im wesentlichen nicht initiierend wirkenden) N-Oxyl-Radikals eine gewisse Kontrolle der radikalisch initiierten Polymerisation ermöglicht.

Der zugrunde liegende Wirkmechanismus liegt vermutlich darin begründet, daß die stabilen N-Oxyl-Radikale reaktive radikalische Enden einer wachsenden Polymerisatkette bei erhöhten Temperaturen nicht irreversibel terminieren, sondern lediglich vorübergehend blockieren. Daraus resultiert eine Verringerung der stationären Konzentration wachsender freier radikalischer Polymerisatkettenenden, was die Möglichkeit für einen irreversiblen Abbruch des Kettenwachstums durch Kombination zweier wachsender Polymerisatkettenenden verringert. Dies führt im Mittel zu mit dem Polymerisationsumsatz (im Idealfall linear) wachsenden Polymerisatketten. Letztes bedingt ein mit dem Polymerisationsumsatz (im Idealfall linear) wachsendes mittleres Molekulargewicht des gebildeten Polymerisats mit einem bei 1 liegenden Polydispersitätsindex PDI.

Gemäß US-A 5,322,912, Spalte 10, Zeile 65 ff kommt als Reaktionsmedium für eine solche kontrollierte radikalisch initiierte Polymerisation auch eine Emulsion in Betracht. Weitergehende Angaben zur Durchführung einer solchen radikalisch initiierten Emulsionspolymerisation macht die US-A 5,322,912 nicht. Das gleiche gilt für die DE-A 19602539. Die US-A 5,412,047 empfiehlt in Spalte 18, Zeilen 54 ff für den Fall, daß die radikalisch initiierte Polymerisation in einem mehrphasigen System erfolgt, wie es bei der radikalisch initiierten wäßrigen Emulsionspolymerisation der Fall ist, lediglich, stabile N-Oxyl-Radikale zu verwenden, die in Wasser eine besonders geringe Löslichkeit aufweisen.

Die Verfügbarkeit einer in einfacher Weise durchzuführenden kontrollierten radikalisch initiierten wäßrigen Emulsionspolymsrisation zur Herstellung von partikelförmigen Polymerisaten wäre insofern von Vorteil, als sie eine kontrollierte Einstellung des Molekulargewichts des Polymerisats ermöglichen würde. Ferner eröffnet sie den unmittelbaren Zugang zu maßgeschneiderten Blockcopolymerisaten, da die freien radikalischen Polymerisatkettenenden nicht durch Kombination zerstört, sondern lediglich reversibel blockiert werden. D.h., nach Verbrauch einer ersten Monomerensorte kann die Polymerisation bei Zusatz weiterer Monomerensorten fortgesetzt werden.

In Macromolecules 1997, 30, S. 324-326 wird empfohlen, zur Herstellung einer wäßrigen Polymerisatdispersion durch kontrollierte initiierte wäßrige Emulsionspolymerisation letztere so zu realisieren, daß man eine vorgebildete wäßrige Polymerisatdispersion (einen sogenannten Saat-Latex) in ein Polymerisationsgefäß vorlegt und der Vorlage die zu polymerisierenden Monomeren sowie eine hydrophobe Verbindung, die unter der Einwirkung von Wärme in ein stabiles N-Oxyl-Radikal und in einen die Polymerisation initiierenden radikalischen Partner zerfällt, zufügt. Dann überläßt man das Reaktionsgemisch bei Raumtemperatur sich selbst, um sowohl den zu polymerisierenden Monomeren als auch der hydrophoben Verbindung die Diffusion in die Saat-Polymerisatteilchen zu ermöglichen (Quellung). Nach erfolgter Quellung wird durch Temperaturerhöhung (> 100°C) die Polymerisation unter überatmosphärischem Druck durchgeführt. Nachteilig an dieser Verfahrensweise ist, daß sie die Vorabherstellung der vergleichsweise komplizierten hydrophoben Verbindung sowie des äußerst langsamen Quellungsprozesses bedarf. Ferner bedarf es unabdingbar der Vorabherstellung eines Saat-Latex.

Der Erfindung lag die Aufgabe zugrunde, den geschilderten Nachteilen abzuhelfen. Insbesondere sollte ein Verfahren bereitgestellt werden, das die Herstellung partikelförmiger Polymerisate aus ethylenisch ungesättigten Monomeren ermöglicht, wobei die partikelförmigen Polymerisate als Schlagzähmodifier für spröde Thermoplaste dienen sollen. Außerdem sollte ein Verfahren bereitgestellt werden, das partikelförmige Polymerisate mit einer guten Phasenanbindung zwischen harter und weicher Phase (z.B. harte Schale/weicher Kern) ergibt.

Demgemäß wurde das eingangs definerte Verfahren gefunden, wobei

a) als radikalischer Polymerisationsinitiator ein Peroxid, ein Hydroperoxid und/oder eine Azoverbindung verwendet wird, deren molale Löslichkeit bei 25°C und 1 bar in Wasser größer oder gleich der entsprechenden molalen Löslichkeit von tert.-Butylhydroperoxid in Wasser ist und deren Zerfallstemperatur im Polymerisationsmedium < 100°C beträgt, und als stabiles N-Oxyl-Radikal wenigstens eine Verbindung der nachstehenden allgemeinen Formel II bis IX verwendet wird,

b) die radikalisch initiierte wäßrige Emulsionspolymerisation bei einer Temperatur oberhalb von 100°C durchgeführt wird,

c) die radikalisch initiierte wäßrige Emulsionspolymerisation bei Drücken durchgeführt wird, die oberhalb des Dampfdrucks des im Polymerisationsgefäß befindlichen Polymerisationsgemisches liegen, und

d) die erhaltene wässrige Polymerisatdispersion auf die partikelförmigen Polymerisate P aufgearbeitet wird, indem das wässrige Medium ganz oder teilweise abgetrennt wird, oder die erhaltene wässrige Polymerisatdispersion als solche weiterverarbeitet wird.

Weiterhin wurden die nach dem Verfahren erhaltenen partikelförmigen Polymerisate P, sowie thermoplastische Formmassen F, enthaltend u. a. die Polymerisate P gefunden, außerdem ein Verfahren zur Herstellung der thermoplastischen Formmassen F, die Verwendung der Polymerisate P als Zusatz zu thermoplastischen Formmassen, die Verwendung der Formmassen F zur Herstellung von Formkörpern und Folien, und Formkörper und Folien aus diesen Formmassen.

Die stabilen N-Oxyl-Radikale lassen sich aus den entsprechenden sekundären Aminen durch Oxidation, z. B. mit Wasserstoffperoxid, herstellen. In der Regel sind sie als Reinsubstanz darstellbar. Bemerkenswerterweise sind erfindungsgemäß solche stabilen N-Oxyl-Radikale von Vorteil, deren molale Löslichkeit im wäßrigen Polymerisationmedium bei 25°C und 1 bar $\geq 10^{-6}$ mol/kg, bevorzugt $> 10^{-5}$ mol/kg, besonders bevorzugt $> 10^{-4}$ mol/kg und ganz besonders $\geq 10^{-3}$ mol/kg beträgt. In der Regel beträgt vorgenannte Löslichkeit von erfindungsgemäß einzusetzenden stabilen N-Oxyl-Radikalen nicht mehr als $10^{-1}$ mol/kg.

Zu den erfindungsgemäß verwendeten stabilen N-Oxyl-Radikalen mit erhöhter Löslichkeit in wäßrigem Medium zählen carboxylierte, phosphonierte, sulfonierte und/oder hydroxylierte piperidin- oder pyrrolidin-N-Oxyle und Di-N-Oxyle der nachstehenden allgemeinen Formeln II bis IX:

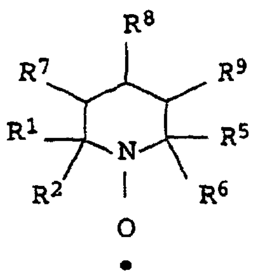
(II),

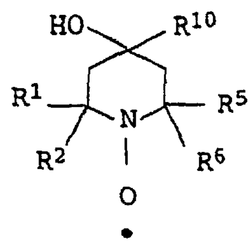
(III),

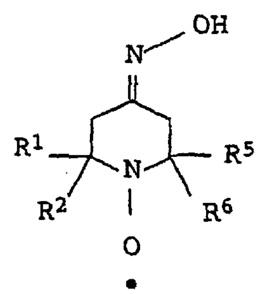
(IV),

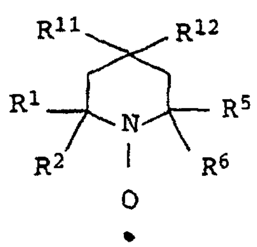
(V),

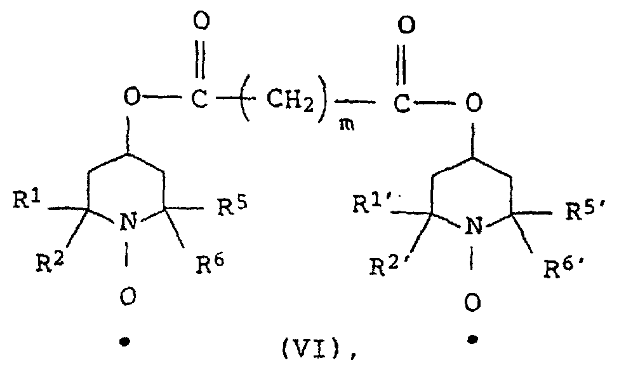
(VI),

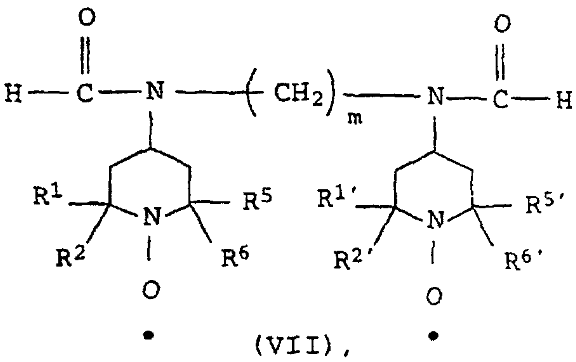

(VII),

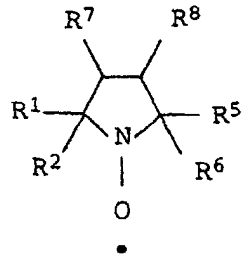

(VIII),

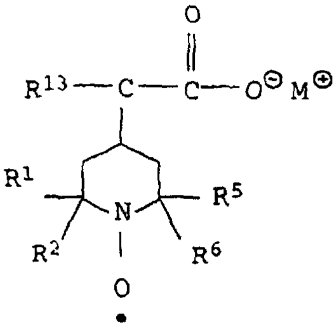

(IX),

mit

m = 2 bis 10,

$R^7$,$R^8$,$R^9$ = unabhängig voneinander

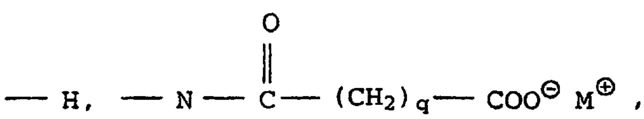

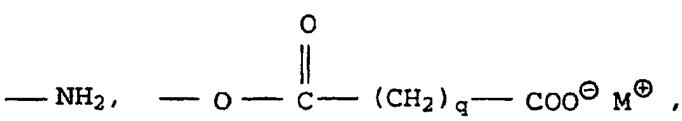

$—COO^{\ominus} M^{\oplus}$, $—SO_3^{\ominus} M^{\oplus}$, $—PO_3^{\ominus} M^{\oplus}$,

$—O—PO_3^{2\ominus} M_2^{\oplus}$, $—O—SO_3^{\ominus} M^{\oplus}$, $—OH$,

$—O—(CH_2—CH_2—O)_q H$

oder

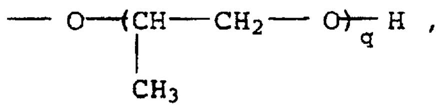

mit der Maßgabe, daß wenigstens einer der vorhandenen Substituenten $R^7$, $R^8$ oder $R^9$ von Wasserstoff verschieden und $M^{\oplus}$ ein Wasserstoff- oder ein Alkalimetallion (insbesondere $K^{\oplus}$ oder $Na^{\oplus}$) ist,

q = eine ganze Zahl von 1 bis 10,

$R^{1'}$,$R^{2'}$,$R^{5'}$,$R^{6'}$ = unabhängig voneinander und unabhängig von $R^1$, $R^2$, $R^5$, $R^6$ dieselben Gruppen wie $R^1$,

$R^{10}$ = $C_1$- bis $C_4$-Alkyl, $-CH=CH_2$, $-C\equiv CH$, -CN,

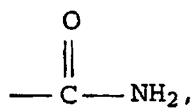

$-COO^{\ominus}M^{\oplus}$, $-COOCH_3$ oder $-COOC_2H_5$,

$R^{11}$ = ein organischer Rest, der wenigstens eine primäre, sekundäre (z.B. $-NR^1$) oder tertiäre Aminogruppe (z.B. $-NR^1R^2$) oder wenigstens eine Ammoniumgruppe $-N^{\oplus}R^{13}R^{14}R^{15}X^{\ominus}$ aufweist, mit $X^{\ominus}$ = $F^{\ominus}$, $Cl^{\ominus}$, $Br^{\ominus}$, $HSO_4^{\ominus}$, $SO_4^{2\ominus}$, $H_2PO_4^{\ominus}$, $HPO_4^{2\ominus}$ oder $PO_4^{3\ominus}$ und $R^{13}$, $R^{14}$, $R^{15}$ voneinander unabhängige organische Reste (z.B. unabhängig voneinander dieselben Gruppen wie $R^1$),

$R^{12}$ = unabhängig von $R^{11}$ dieselben Gruppen wie $R^{11}$ oder -H, -OH, $C_1$- bis $C_4$-Alkyl, $-COO^{\ominus}M^{\oplus}$, $-C\equiv CH$,

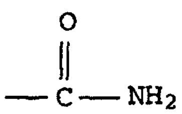, 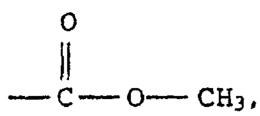, 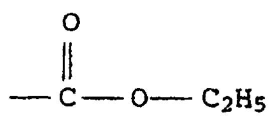

oder hydroxysubstituiertes $C_1$- bis $C_4$-Alkyl (z.B. hydroxyethyl oder hydroxypropyl) und

$R^{13}$ = $-H$, $-CH_3$ oder 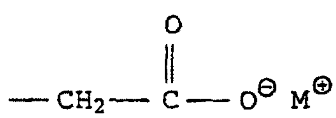 .

Vorzugsweise ist $R^1 = R^2 = R^5 = R^6 = R^{1'} = R^{2'} = R^{5'} = R^{6'} = -CH_3$.

Häufig entspricht bereits die molale Löslichkeit der stabilen N-Oxyl-Radikale in Wasser den erfindungsgemäß für das wäßrige Polymerisationsmedium gewünschten Löslichkeitswerten. Trifft vorgenanntes nicht zu, läßt sich insbesondere dann, wenn das stabile N-Oxyl-Radikal als funktionelle Gruppe eine saure oder basische Gruppe aufweist, der erfindungsgemäß für das wäßrige Polymerisationsmedium als bevorzugt geforderte Löslichkeitswert in an sich bekannter Weise durch Variation des pH-Wertes des wäßrigen Polymerisationsmediums (z.B. Zusatz einer Base, z. B. $NH_3$, KOH oder NaOH, oder Zusatz einer Säure, z.B. HCl, $H_2SO_4$ oder $H_3PO_4$) einstellen.

Als beispielhafte Vertreter erfindungsgemäß geeigneter stabiler N-Oxyl-Radikale seien
4-Hydroxy-2,2,6,6-tetramethyl-1-oxyl-piperidin,
4-Hydroxy-2,6-diphenyl-2,6-dimethyl-1-oxyl-piperidin,
4-Carboxy-2,2,6,6-tetramethyl-1-oxyl-piperidin,
4-Carboxy-2,6-diphenyl-2,6-dimethyl-1-oxyl-piperidin,
3-Carboxy-2,2,5,5-tetramethyl-1-oxyl-pyrrolidin,

3-Carboxy-2,5-diphenyl-2,5-dimethyl-1-oxyl-pyrrolidin und das Natrium-, Ammonium oder Kaliumsalz des Schwefelsäurehalbesters des 4-Hydroxy-2,2,6,6-tetramethyl-1-oxyl-piperidin genannt.

Die Herstellung von 3-Carboxy-2,2,5,5-tetramethyl-1-oxyl-pyrrolidin findet sich z.B. in Romanelli, M.; Ottaviani, M.F.; Martini, G.; Kevan, L., JPCH J: Phys. Chem., EN, 93, 1, 1989, S. 317 - 322.

Die Verbindungen (VI) und (VII) können gemäß US-A 4665185 (z.B. Bsp. 7) sowie DE-A 19510184 erhalten werden.

Weitere geeignete beispielhafte Vertreter sind:

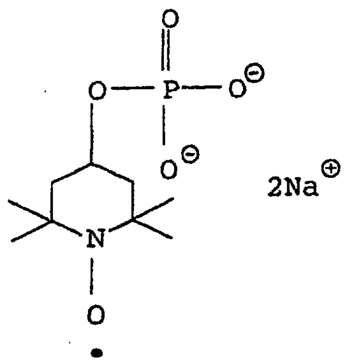

Sunamoto, Junzo; Akiyoshi, Kuzunari, Kihara, Tetsuji; Endo, Masayuki, BCS JA 8, Bull, Chem. Soc. Jpn., EN, 65, 4, 1992, S. 1041 - 1046;

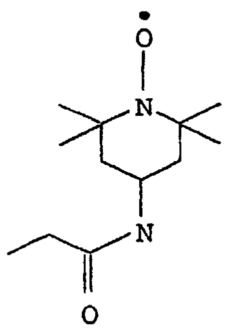

Beilstein Registry Number 6926369 ($C_{11}H_{22}N_3O_2$);

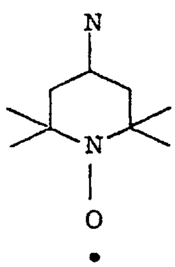

Beilstein Registry Number 6498805 (4-Amino-2,2,6,6-tetramethyl-1-oxyl-piperidin);

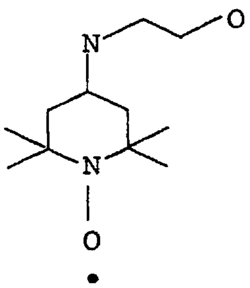

Beilstein Registry Number 6800244 ($C_{11}H_{23}N_2O_2$);

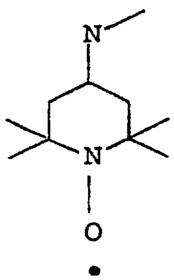

Beilstein Registry Number 5730772 (N-Methyl-4-amino-2,2,6,6-tetra-methyl-1-oxyl-piperidin);

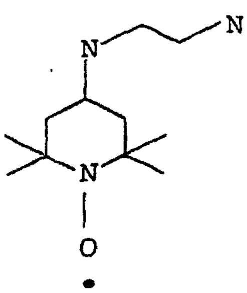

Beilstein Registry Number 5507538 (2,2,6,6-Tetramethyl-4-(2-amino-ethylamino)-1-oxyl-piperidin);

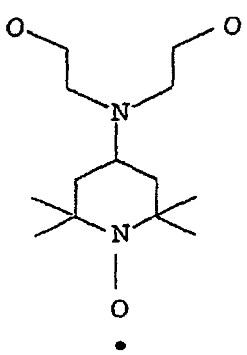

Beilstein Registry Number 4417950 (4<Bis(2-hydroxyethyl)>-amino-2,2,6,6-tetramethyl-1-oxyl-piperi-din);

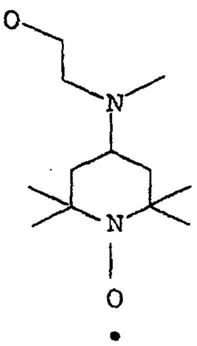

Beilstein Registry Number 4396625
($C_{12}H_{25}N_2O_2$);

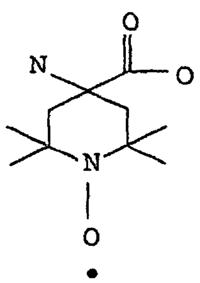

Beilstein Registry Number 4139900
(4-Amino-2,2,6,6-tetra-methyl-4-carboxy-1-oxyl-piperidin);

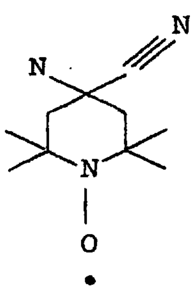

Beilstein Registry Number 4137088
(4-Amino-4-cyano-2,2,6,6-tetra-methyl-1-oxyl-piperidin);

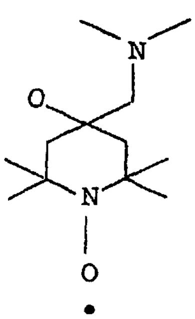

Beilstein Registry Number 3942714
($C_{12}H_{25}N_2O_2$);

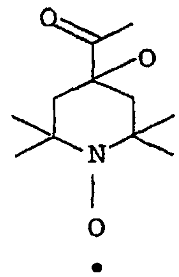

Beilstein Registry Number 1468515 (2,2,6,6-Tetramethyl-4-hydroxy-4-acetyl-1-oxyl-piperidin);

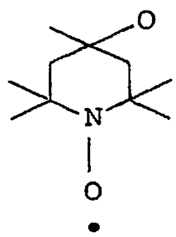

Beilstein Registry Number 1423410 (2,2,4,6,6-Pentamethyl-4-hydroxy-1-oxyl-piperidin);

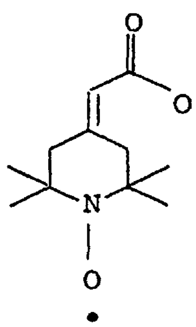

Beilstein Registry Number 6205316 (4-Carboxymethylen-2,2,6,6-tetramethyl-1-oxyl-piperidin);

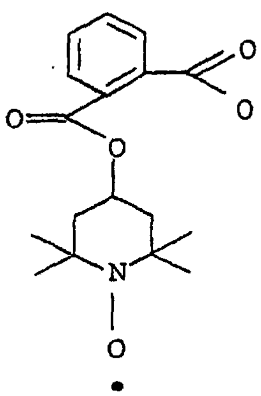

Beilstein Registry Number 1395538 (4-<2-Carboxy-benzoyloxy>-2,2,6,6-tetramethyl-1-oxyl-piperidin);

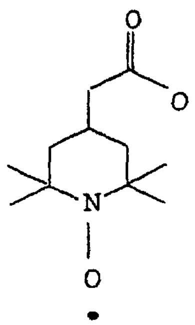

Beilstein Registry Number 3546230 (4-Carboxymethyl-2,2,6,6-tetra-methyl-1-oxyl-piperidin);

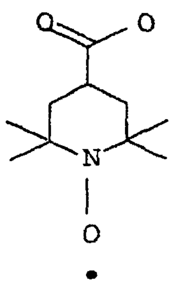

Beilstein Registry Number 3949026 (4-Carboxyl-2,2,6,6-tetra-methyl-1-oxyl-piperidin);

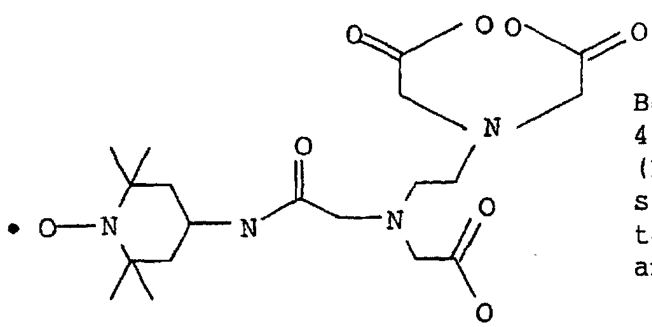

Beilstein Registry Number 4611003 (Ethylendiamintetraessig-säuremono(1-oxy-2,2,6,6-tetramethylpiperidinyl-4-amid);

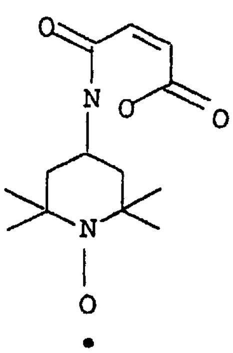

Beilstein Registry Number 5961636 ($C_{13}H_{21}N_2O_4$)

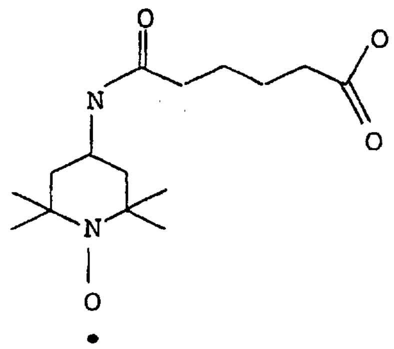

Beilstein Registry Number 5592232 ($C_{15}H_{27}N_2O_4$);

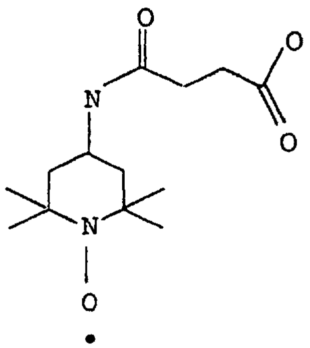

Beilstein Registry Number 5080576 (Bernsteinsäure-N-(2,2,6,6-tetramethyl-1-oxyl-4-piperidinyl)-monoamid);

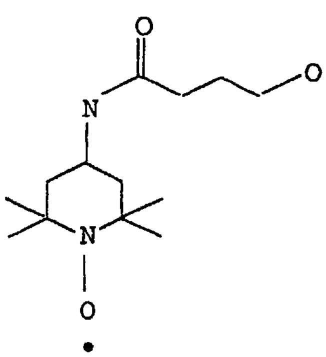

Beilstein Registry Number 5051814 (4-(4-Hydroxybutanoylamino)-2,2,6,6-tetramethyl-1-oxyl-piperidin);

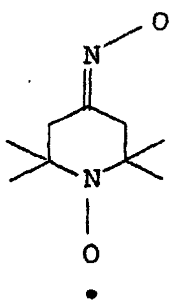

Beilstein Registry Number 4677496 (2,2,6,6-Tetramethyl-4-oximino-1-oxyl-piperidin);

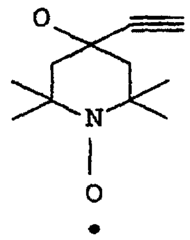

Beilstein Registry Number 1451068 ($C_{11}H_{18}NO_2$);

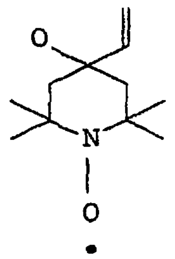

Beilstein Registry Number 1451075 ($C_{11}H_{20}NO_2$);

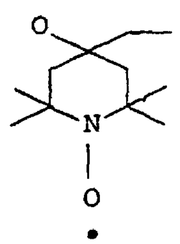

Beilstein Registry Number 1423698 (4-Ethyl-4-hydroxy-2,2,6,6-tetramethyl-1-oxyl-piperidin);

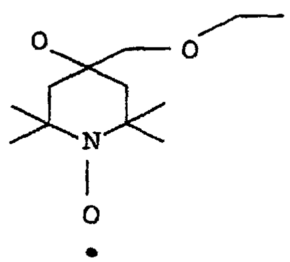

Beilstein Registry Number 5509793 (4-Ethoxymethyl-4-hydroxy-2,2,6,6-tetramethyl-1-oxyl-piperidin);

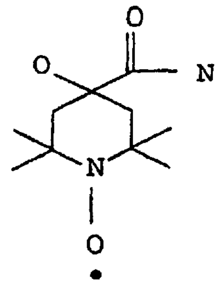

Beilstein Registry Number 3960373 ($C_{10}H_{19}N_2O_3$);

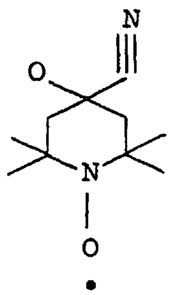

Beilstein Registry Number ($C_{10}H_{17}N_2O_2$);

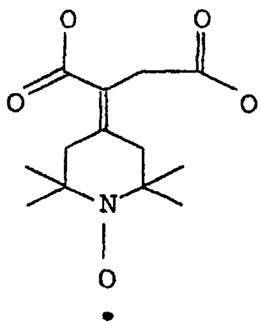

Beilstein Registry Number 3985130 (2,2,6,6-Tetramethyl-1-oxyl-4-piperidyliden)-bernsteinsäure).

Selbstverständlich können erfindungsgemäß auch Gemische von stabilen N-Oxyl-Radikalen angewendet werden. Es überrascht, daß erfindungsgemäß solche stabilen N-Oxyl-Radikale anwendbar sind, deren molale Löslichkeit bei 25°C und 1 bar im wäßrigen Polymerisationsmedium größer ist als die entsprechende molale Löslichkeit in den zu polymerisierenden Monomeren bzw. in dem zu polymerisierenden Monomerengemisch.

Erfindungsgemäß geeignete radikalische Polymerisationsinitiatoren sind beispielsweise Azoverbindungen wie 4,4'-Azo-bis-cyanovaleriansäure, Hydroperoxide wie tert.-Butylhydroperoxid und/oder Peroxide wie Wasserstoffperoxid oder Peroxodischwefelsäure und deren Alkalimetallsalze (insbesondere $K^{\oplus}$- und $Na^{\oplus}$-Salz). Weitere geeignete radikalische Polymerisationsinitiatoren finden sich in Ullmanns Encyclopädie der Technischen Chemie, Verlag Chemie, Weinheim, 4. Auflage, Band 15, S. 187 ff. Auch können kombinierte Systeme, die aus wenigstens einem organischen Reduktionsmittel und wenigstens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure verwendet werden. Ferner eignen sich kombinierte Systeme, die über Reduktionsmittel und Peroxid hinaus, eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)-sulfat/Wasserstoffperoxid.

Bezogen auf die molare Menge an radikalisch zu polymerisierenden Monomeren beträgt die Menge an im erfindungsgemäßen Verfahren eingesetztem radikalischem Polymerisationsinitiator in der Regel $10^{-6}$ bis 2 mol-%, meist $10^{-4}$ bis 1 mol-% und richtet sich in an sich bekannter Weise nach dem gewünschten Molekulargewicht des resultierenden in disperser Verteilung befindlichen Polymerisats.

Das molare Verhältnis zwischen stabilen N-Oxyl-Radikalen und radikalischem Polymerisationsinitiator beträgt im Rahmen des erfindungsgemäßen Verfahrens normalerweise 0,5 bis 5, bevorzugt 0,8 bis 4.

Durch Zugabe von organischen Säuren wie Camphersulfonsäure oder p-Toluolsulfonsäure (US-A 5,322,912) oder durch Zugabe von Dimethylsulfoxid (US-A 5,412,047) bzw. Indolylessigsäure zum Polymerisationsgemisch kann die Polymerisationsgeschwindigkeit des erfindungsgemäßen Verfahrens in der Regel erhöht werden.

Als erfindungsgemäß geeignete Dispergiermittel eignen sich insbesondere die im Rahmen radikalisch initiierter wäßriger Emulsionspolymerisationen üblicherweise eingesetzten Emulgatoren. Dies sind z.B. Blockcopolymere von Ethylenoxid und Propylenoxid, ethoxylierte Mono-, Di- und Tri-Alkylphenole (z.B. EO-Grad: 3 bis 50 u. Alkylrest: $C_4$- bis $C_9$), ethoxylierte Fettalkohole (z.B. EO-Grad: 3 bis 50 u. Alkylrest: $C_8$- bis $C_{36}$), sowie Alkali- und Ammoniumsalze von Alkylsulfaten (z.B. Alkylrest: $C_8$- bis $C_{30}$), von Schwefelsäurehalbestern ethoxylierter Alkanole (z.B. EO-Grad: 4 bis 30 u. Alkylrest: $C_{12}$- bis $C_{30}$) und ethoxylierter Alkylphenole (z.B. EO-Grad: 3 bis 50 u. Alkylrest: $C_4$- bis $C_{15}$), von Alkylsulfonsäuren (z.B. Alkylrest: $C_{12}$- bis $C_{35}$) und von Alkylarylsulfonsäuren (z.B. Alkylrest: $C_9$- bis $C_{35}$).

Weitere geeignete Dispergiermittel sind Verbindungen der allgemeinen Formel X

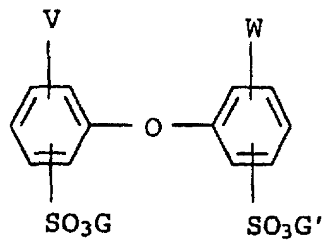

(X) ,

worin V und W Wasserstoff oder $C_4$- bis $C_{14}$-Alkyl bedeuten und nicht gleichzeitig Wasserstoff sind, und G und G' Alkalimetallionen und/oder Ammoniumionen sein können. Vorzugsweise bedeuten V, W lineare oder verzweigte Alkylreste mit 6 bis 18 C-Atomen oder Wasserstoff und insbesondere mit 6, 12 und 16 C-Atomen, wobei V und W nicht beide gleichzeitig Wasserstoff sind. G und H sind bevorzugt Natrium, Kalium oder Ammoniumionen, wobei Natrium besonders bevorzugt ist. Besonders vorteilhaft sind Verbindungen X, in denen G und G' Natrium, V ein verzweigter Alkylrest mit 12 C-Atomen und W Wasserstoff oder V ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die Verbindungen X sind allgemein bekannt, z.B. aus der US-A 4,269,749, und im Handel erhältlich.

Bezogen auf die zu polymerisierenden Monomeren beträgt die erfindungsgemäß zu verwendende Dispergiermittelmenge in der Regel 0,1 bis 10 Gew. -%. Bei Beginn der erfindungsgemäßen radikalisch initiierten wäßrigen Emulsionspolymerisation wird die Emulgatormenge in der Regel als oberhalb der kritischen Micellbildungskonzentration liegend gewählt.

Als wenigstens eine ethylenisch ungesättigte Gruppe aufweisende Monomere kommen z.B. Olefine wie Ethylen oder Propylen, vinylaromatische Monomere wie Styrol, Divinylbenzol, 2-Vinylnaphthalin und 9-Vinylanthracen, substituierte vinylaromatische Monomere wie p-Methylstyrol, $\alpha$-Methylstyrol, o-Chlorstyrol, p-Chlorstyrol, 2,4-Dimethylstyrol und 4-Vinylbiphenyl, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat, Ester aus 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 20, häufig 1 bis 12, meist 1 bis 8 und besonders häufig 1 bis 4 C-Atome aufweisenden Alkanolen wie insbesondere Acrylsäure- und Methacrylsäuremethyl-ethyl-, -n-butyl-, -isobutyl-, -tert.-butyl- und -2-ethylhexylester, Maleinsäuredimethylester oder Maleinsäure-n-butylester, die Nitrile der vorgenannten $\alpha,\beta$-monoethylenisch ungesättigten Carbonsäuren wie Acrylnitril und Methacrylnitril sowie $C_{4-8}$-konjugierte Diene wie 1,3-Butadien und Isopren. Die vorgenannten Monomeren bilden in der Regel die Hauptmonomeren, die, bezogen auf die Gesamtmenge der zu polymerisierenden Monomeren, normalerweise einen Anteil von mehr als 50 Gew.-% auf sich vereinen. Monomere, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der zu polymerisierenden Monomeren, von weniger als 50 Gew.-%, in der Regel 0 bis 20 und meist 0 bis 10 Gew.-%, mit einpolymerisiert.

Beispiele für derartige Monomere sind 3 bis 6 C-Atome aufweisende $\alpha,\beta$-monoethylenisch ungesättigte Mono- und Dicarbonsäuren sowie deren Anhydride und Amide wie z.B. Acrylsäure, Methacrylsäure, Maleinsäure, Fumarsäure, Itaconsäure, Acrylamid und Methacrylamid, aber auch die Monoester dieser Carbonsäuren mit mehrwertigen Alkoholen wie Hydroxyethylacrylat, Hydroxypropylacrylat, ferner Vinylsulfonsäure sowie N-Vinylpyrrolidon.

Als Styrolverbindungen kommen solche der allgemeinen Formel (XI) in Betracht:

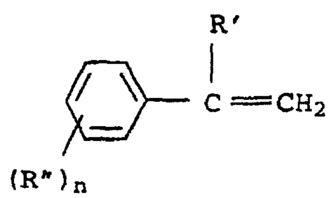

(XI)

in der R' und R" unabhängig voneinander für H oder $C_1$-$C_8$-Alkyl und n für 0,1,2 oder 3 stehen.

Vorzugsweise ist das erfindungsgemäße Verfahren auf die Monomeren Styrol, $\alpha$-Methylstyrol, Divinylbenzol,

Vinyltoluol, $C_1$- bis $C_8$-Alkyl(Meth) - acrylate, insbesondere n-Butylacrylat, 2-Ethylhexylacrylat oder Methylmethacrylat, und Butadien, außerdem Acrylnitril sowie auf Monomerengemische anwendbar, die zu wenigstens 85 Gew.-% aus vorgenannten Monomeren oder Gemischen der vorgenannten Monomeren zusammengesetzt sind.

Erfindungsgemäß lassen sich in vergleichsweise kontrollierter Weise sowohl statistische, alternierende als auch segmentierte Copolymerisate, insbesondere Zwei- und Dreiblockcopolymerisate, aus vorgenannten Monomeren im wäßrigen Medium in disperser Verteilung befindlich erzeugen. Von besonderer Bedeutung ist die erfindungsgemäße Herstellung von Poly(n-butylacrylat) sowie von Blockcopolymerisaten die Poly(n-butylacrylat) als wenigstens ein Segment enthalten. Durch entsprechende Steuerung der Zufuhr an zu polymerisierenden Monomeren können auch Gradientenpolymerisate, d.h., Polymerisate mit zu- oder abnehmendem Comonomergehalt entlang der Polymerisatkette hergestellt werden. Bei Dreiblockcopolymerisaten A-Block-B-Block-C-Block können die Blöcke A und C aus gleichen oder verschiedenen Monomeren aufgebaut sein. Die Glasübergangstemperatur der Blöcke kann nach Belieben gewählt werden. Beispielsweise kann die chemische Zusammensetzung der Blöcke A, C so gewählt werden, daß ihre Glasübergangstemperatur ≥ 0°C beträgt ("harter" Block). Gleichzeitig kann die chemische Zusammensetzung des Blocks B so gewählt werden, daß dessen Glasübergangstemperatur < 0°C beträgt ("weicher" Block). Dabei kann der Block B z.B. zu mehr als 70 Gew.-% aus $C_1$- bis $C_8$-(Meth)acrylaten in polymerisierter Form aufgebaut sein. Häufig ist der Block B dabei aus n-Butylacrylat, 2-Ethylhexylacrylat oder deren Gemischen in polymerisierter Form aufgebaut.

In einer bevorzugten Ausführungsform wird demnach die chemische Zusammensetzung des Polymerisats P so gewählt, daß Phasen mit einer Glastemperatur größer 0°C ("hart") und kleiner 0°C ("weich") vorhanden sind, die in beliebiger Reihenfolge auftreten können (z.B. hart-weich-hart, weich-weich-hart, hart-weich-hart-hart, weich-weich-hart-hart, hart-hart-weich-hart, hart-hart-weich-hart).

Selbstverständlich können als Comonomere auch solche einpolymerisiert werden, die mehr als eine vinylgruppe aufweisen. Als Ergebnis werden vernetzte Polymerisate erhalten. Übliche Vertreter sind beispielsweise Divinylbenzol und Butandioldiacrylat. Erfindungsgemäß besonders vorteilhaft ist die Herstellung von Polymerisatpartikeln, die eine Kern/Schale-Morphologie aufweisen. Die vorteilhaftigkeit resultiert insbesondere aus einer verbesserten Anknüpfung der Schale an den Kern, und der Schalen aneinander (im Falle mehrerer Schalen). Erhältlich ist eine Kern/Schale-Morphologie in der Regel dann, wenn mit der Polymerisationsdauer ein Monomerenwechsel vollzogen und gleichzeitig eine Neubildung von dispergierten Polymerisatpartikeln im wesentlichen unterdrückt wird. Vorzugsweise werden in den Kern vernetzend wirkende Monomere copolymerisiert. Beispielsweise kann der Kern aus Polystyrol oder Polymethylmethacrylat oder aus einem Copolymerisat von Styrol und Acrylnitril aufgebaut sein und eine Glasübergangstemperatur ≥ 25°C aufweisen. Die erste Schale kann beispielsweise aus Polybutadien, Poly-n-alkylacrylat wie Poly-nbutylacrylat oder aus Copolymerisaten mit einer Glasübergangstemperatur Tg < 0°C bestehen. Daran kann sich eine oder mehrere weitere harte Schälen (z.B. aus Polystyrol, Polymethylmethacrylat oder Poly-styrol-acrylnitril-copolymerisat) mit einer Tg ≥ 25°C anschließen.

Die Phasenanbindung zwischen den harten und den weichen Phasen ist gegenüber herkömmlichen Verfahren deutlich verbessert. Diese Kern/Schale-Teilchen können als Komponenten für Polymer-Blends verwendet werden (z.B. zur Zähmodifizierung von PSAN). Bezüglich des Aufbaus von solchen Kern/Schale-Teilchen, z.B. bezüglich der Teilchengrößen, Teilchengrößenverteilung, Vernetzungsgrad. Pfropfgrad, um nur die wichtigsten Eigenschaften zu nennen, sei auf die dem Fachmann geläufige Literatur zur konventionellen radikalischen Emulsionspolymerisation verwiesen.

In manchen Fällen kann die Phasenanbindung (Pfropf anbindung) durch Mitverwenden von bifunktionellen Comonomeren weiter verbessert werden, deren funktionelle Gruppen unterschiedliche Reaktivitäten aufweisen (sog. pfropfaktive Comonomere), beispielsweise Alkylmethacrylat und Dihydrodicyclopentadienylacrylat. Diese Ausführungsform kann z.B. dann vorteilhaft sein, wenn man die Polymerisation unter kontrollierten Bedingungen - also erfindungsgemäß - beginnt und ab einem bestimmten Monomerumsatz klassisch weiterpolymerisiert.

Das Molekulargewicht der erfindungsgemäß erhältlichen, in wäßrigem Medium dispergiert befindlichen, Polymerisate P ist in einfacher Weise dadurch einstellbar, daß man zum gewünschten Zeitpunkt die Polymerisationstemperatur absenkt und so die Blockade der wachsenden Polymerisatkettenenden durch die stabilen N-Oxyl-Radikale einfriert. In der Regel tritt dies bei unterhalb 100°C liegenden Temperaturen ein. Durch Temperaturerhöhung kann eine solche Blockade rückgängig gemacht werden. Eine andere Möglichkeit zur Einstellung des Molekulargewichts besteht in der Begrenzung der Menge der zu polymerisierenden Monomeren. Eine irreversible Molekulargewicbtseinstellung gestattet der Zusatz von klassischen Molekulargewichtsreglern wie Estern aus Thioglykolsäure und 2-Ethylhexanol oder tert.-Dodecylmercaptan. Ihr Zusatz terminiert die wachsenden Polymerisatkettenenden irreversibel und befreit die Polymerisatketten von den stabilen N-Oxyl-Radikalen, die nachfolgend z.B. durch in geeigneter Weise durchzuführende Extraktion eliminiert werden können.

Erfindungsgemäß sind so in einfacher Weise partikelförmige Polymerisate P erhältlich, deren gewichtsmittleres Molekulargewicht $\overline{M}_w$ gezielt Werte von ≥ 1000 bis 250 000, bzw. ≥ 10 000 bis 250 000 beträgt. Die Polydispersitätsindices des Molekulargewichts betragen regelmäßig < 2, üblicherweise < 1,5. Im Fall von Blockcopolymerisaten gilt dies auch für die einzelnen Segmente.

Die Polymerisationstemperatur beträgt erfindungsgemäß > 100°C, vorteilhaft > 100°C bis 180°C. Besonders vorteilhaft sind Temperaturen von 110 bis 150°C.

Erfindungsgemäß wesentlich ist, daß der Polymerisationsdruck oberhalb des Dampfdrucks des Polymerisationsgemisches bei der entsprechenden Polymerisationstemperatur liegt. Er kann > 1 bar bis 1000 bar betragen. Mit Vorteil beträgt der Polymerisationsdruck 2 bis 20 bar. Ganz besonders vorteilhaft ist ein Polymerisationsdruck von 4 bis 10 bzw. insbesondere 5 bis 8 bar.

In einfacher Weise lassen sich die gewünschten Druckverhältnisse dadurch einstellen, daß man im Polymerisationsreaktor vor dem Aufheizen des Polymerisationsgemisches auf die gewünschte Polymerisationstemperatur mittels inerten Gasen wie z.B. Methan, $CO_2$, CO, Ar, He oder $N_2$ einen Vordruck einstellt. In typischer Weise kann ein solcher Vordruck z.B. 3 bis 5 bar betragen. Anschließend wird der geschlossene Polymerisationsreaktor auf die Polymerisationstemperatur gebracht. Üblicherweise erfolgt die Durchführung der erfindungsgemäßen radikalisch initiierten wäßrigen Emulsionspolymerisation unter Ausschluß von molekularem Sauerstoff.

Selbstverständlich kann aber auch im Beisein von molekularem Sauerstoff polymerisiert werden. D.h., der gewünschte Vordruck kann z.B. auch mittels Luft eingestellt werden. Aber auch gasförmige Monomere wie Butadien oder Ethylen, gegebenenfalls im Gemisch mit vorgenannten Gasen, können zur Vordruckeinstellung herangezogen werden. Üblicherweise erfolgt die Vordruckeinstellung bei Temperaturen < 100°C. In der Regel wird sie bei Temperaturen von 0°C bis 75°C bzw. 25°C bis 75°C vorgenommen. Häufig wird im Beisein von pH-Puffern wie Natriumbicarbonat polymerisiert.

In besonders einfacher Weise läßt sich das erfindungsgemäße Verfahren so durchführen, daß man alle Bestandteile des Polymerisationsgemisches (einschließlich der wäßrigen Phase) in das gerührte Polymerisationsgefäß vorlegt, den gewünschten Vordruck einstellt und anschließend unter Fortsetzung des Rührens im geschlossenen Polymerisationsgefäß die gewünschte Polymerisationstemperatur einstellt und unter Aufrechterhaltung der Polymerisation bis zum gewünschten Umsatz polymerisiert. Häufig wird die Temperatur auch zunächst auf einen Wert von 50°C bis < 100°C eingestellt, um den Zerfall des radikalischen Polymerisationsinitiators auszulösen. Auf die eigentliche Polymerisationstemperatur wird anschließend erwärmt. Selbstverständlich können die zu polymerisierenden Monomeren dem Polymerisationsgefäß auch stufenund/oder gradientenförmig zugeführt werden. Ebenso können die stabilen N-Oxyl-Radikale und der verwendete radikalische Polymerisationsinitiator vor, während oder nach Beendigung eines Polymerisationsschritts dem Polymerisationsgemisch zugegeben werden. Der Feststoffgehalt der resultierenden wäßrigen Polymerisatdispersion beträgt in der Regel 20 bis 50 Vol.-%. Er kann jedoch bei Bedarf bis zu 75 Vol.-% betragen.

Durch chemische Agglomeration und/oder Druckagglomeration läßt sich der Durchmesser der dispergierten Polymerisatteilchen der resultierenden wäßrigen Polymerisatdispersion vergrößern. Zum Zweck der Kontrolle der Durchmesser der in der resultierenden wäßrigen Polymerisatdispersion enthaltenen Polymerisatteilchen können erfindungsgemäß selbstredend auch Saatlatices zugesetzt werden. Dies kann vor oder während der Durchführung der erfindungsgemäßen radikalisch initiierten wäßrigen Emulsionspolymerisation erfolgen. Im Unterschied zum Verfahren des nächstliegenden Standes der Technik bedarf es erfindungsgemäß jedoch keiner Quellung solcher Saatpolymerisatpartikel. Eine Saatfahrweise wird insbesondere dann angewendet werden, wenn man an einer breiten Durchmesserverteilung der resultierenden Polymerisatpartikel interessiert ist. Mit Vorteil wird man erfindungsgemäß als wäßrige Saatpolymerisatdispersion eine solche verwenden, die ebenfalls nach der erfindungsgemäßen Polymerisationsweise hergestellt wurde.

In einer bevorzugten Ausführungsform stimmt man die Reaktionsbedingungen in an sich bekannter Weise so aufeinander ab, daß die partikelförmigen Polymerisate P einen möglichst einheitlichen Durchmesser $d_{50}$ im Bereich von 60 bis 1000, bevorzugt 80 bis 700 nm haben, wobei die Teilchengrößenverteilung vevorzugt eng ist. In einer anderen bevorzugten Ausführungsform stimmt man die Reaktionsbedingungen so aufeinander ab, daß die Polymerisat-Teilchen eine bimodale Teilchengrößenverteilung aufweisen, also eine Größenverteilung mit zwei Maxima. Die mittleren Teilchendurchmesser $d_{50}$ betragen 25 bis 200, bevorzugt 60 bis 170 und besonders bevorzugt 80 bis 150 nm einerseits, und 350 bis 650, bevorzugt 400 bis 550 und besonders bevorzugt 430 bis 500 nm andererseits. Einzelheiten sind in der DE-OS 24 27 960 beschrieben.

Beispielsweise kann zur Herstellung eines bimodalen Polymerisates wie folgt vorgegangen werden: Man polymerisiert die Monomeren, welche den Kern aufbauen, bis zu einem Umsatz von üblicherweise mindestens 90, bevorzugt mindestens 95 %, bezogen auf die eingesetzten Monomeren. Dieser Umsatz ist in der Regel nach 4 bis 20 Stunden erreicht. Die auf diese Weise erhaltene Dispersion der Kernteilchen hat eine mittlere Teilchengröße $d_{50}$ von maximal 200 nm und eine enge Teilchengrößenverteilung (nahezu monodisperses System).

In der zweiten Stufe wird die Dispersion des Kerns agglomeriert. Dies geschieht in der Regel durch Zugabe einer Dispersion eines Acrylesterpolymerisates. Vorzugsweise werden Dispersionen von Copolymerisaten von Acrylestern von Alkoholen mit 1 bis 4 Kohlenstoffatomen, vorzugsweise von Ethylacrylat, mit 0,1 bis 10 Gew.-% wasserlösliche Polymerisate bildenden Monomeren, wie z.B. Acrylsäure, Methacrylsäure, Acrylamid oder Methacrylamid, N-Methylolmethacrylamid oder N-Vinylpyrrolidon, eingesetzt. Besonders bevorzugt ist ein Copolymerisat aus 96 %

Ethylacrylat und 4 % Methacrylamid. Die Agglomerierdispersion kann gegebenenfalls auch mehrere der genannten Acrylesterpolymerisate enthalten.

Die Konzentration der Acrylesterpolymerisate in der Acrylester-Dispersion soll im allgemeinen zwischen 3 und 40 Gew.-% liegen. Bei der Agglomeration werden 0,2 bis 20, vorzugsweise 1 bis 5 Gew.-Teile der Agglomerierdispersion auf 100 Teile zu agglomerierenden Dispersion, jeweils berechnet auf Feststoffe, eingesetzt. Die Agglomeration wird in der Regel durch Zugabe der Agglomerierdispersion zur feinteiligen Dispersion der Kernpartikel durchgeführt. Die Geschwindigkeit der Zugabe ist normalerweise nicht kritisch, im allgemeinen dauert sie etwa 1 bis 30 Minuten bei einer Temperatur zwischen 20 und 90°C, vorzugsweise zwischen 30 und 75°C.

Unter den genannten Bedingungen wird nur ein Teil der Kernteilchen agglomeriert, so daß eine bimodale Verteilung entsteht. Dabei liegen nach der Agglomeration im allgemeinen mehr als 50, vorzugsweise zwischen 75 und 95 % der Teilchen (Zahlen-Verteilung) im nicht agglomerierten Zustand vor. Die erhaltene teilagglomerierte Dispersion des Kerns ist verhältnismäßig stabil, so daß sie ohne weiteres gelagert und transportiert werden kann, ohne daß Koagulation eintritt.

Die Pfropfung des Kerns mit der Pfropfschale erfolgt in an sich bekannter Weise, beispielsweise im gleichen System wie die Herstellung des Pfropfkerns.

Die erhaltene wässrige Polymerisatdispersion wird auf die partikelförmigen Polymerisate P aufgearbeitet, indem das wässrige Medium ganz oder teilweise abgetrennt wird. Dazu wird das in dem wässrigen Medium dispergierte, partikelförmige Polymerisat P zunächst ausgefällt, beispielsweise durch Zugabe eines koagulierenden Fällmittels wie $CaCl_2$, $MgSO_4$, Essigsäure, Schwefelsäure usw. Die Wasserphase wird beispielsweise durch Sieben, Auspressen, Filtrieren, Dekantieren, Zentifugieren oder andere Fest-flüssig-Trennverfahren abgetrennt. Das erhaltene, feuchte Polymerisat P kann entweder direkt weiterverarbeitet werden, oder die Restfeuchte kann durch thermische Trocknung, z.B. mittels Warmluft in einem Stromtrockner entfernt werden. Die wässrige Dispersion kann auch nach dem Verfahren der Sprühtrocknung aufgearbeitet werden.

Es ist auch möglich, die erhaltene wässrige Polymerisatdispersion als solche weiter zu verarbeiten. Beispielsweise kann die Dispersion mit anderen Polymerisaten in einer Mischvorrichtung unter gleichzeitiger Entfernung der wässrigen Phase vermischt werden.

Erfindungsgemäß sind so Polymerisatpartikel P erhältlich, die aus Polymerisat der nachfolgenden Struktur bestehen:

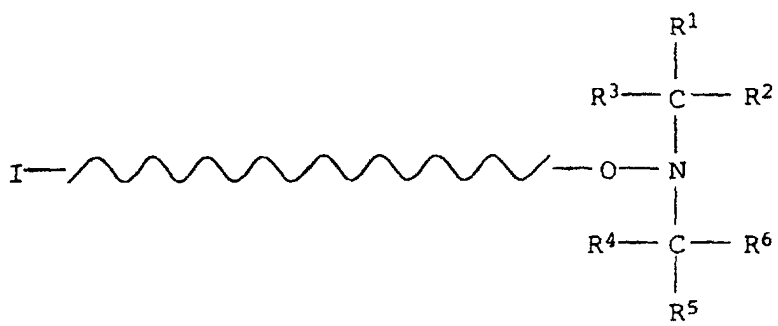

,

mit

I = Rest des radikalischen Polymerisationsinitiators und 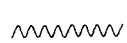 = verzweigtes oder lineares Copolymerisat.

Verwendet man einen radikalischen Polymerisationsinitiator, der beim thermischen Zerfall Bruchstücke mit mehr als einer radikalischen Funktionalität entwickelt, sind auch nachfolgende Strukturen möglich:

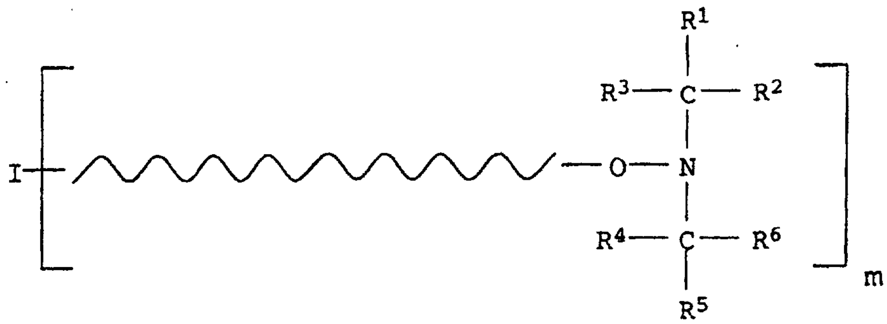

mit m = 1 bis 4.

Ähnliche Strukturen sind möglich, wenn mehrwertige stabile N-Oxyl-Radikale verwendet werden, d.h. Verbindungen, die mehr als eine N-Oxyl-Radikalgruppe aufweisen.

Handelt es sich bei 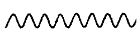 um ein Blockcopolymerisat aus einem hydrophoben und einem hydrophilen Block, sind vorgenannte Strukturen als Dispergiermittel geeignet (vgl. die ältere Anmeldung DE-A 19648029).

Es kann zweckmäßig sein, die erfindungsgemäße Verfahrensweise mit einer klassischen radikalisch initiierten wäßrigen Emulsionspolymerisation zu kombinieren. Dies kann beispielsweise dadurch erfolgen, daß man klassisch beginnt und anschließend erfindungsgemäß fortfährt, oder umgekehrt verfährt. In beiden Fällen ist die Polydispersität des resultierenden Polymerisats erhöht.

Im letzteren Fall (Polymerisation erst erfindungsgemäß, dann klassisch) wird beispielsweise zum als angemessen erachteten Zeitpunkt radikalischer Polymerisationsinitiator im Überschuß (relativ zur enthaltenen Menge an N-Oxyl-Radikal) zugesetzt. Bei dieser Vorgehensweise wird also zunächst die Polymerisation unter den erfindungsgemäßen Bedingungen bis zu einem bestimmten Umsatz geführt. Will man dann die Reaktion unter den klassischen Bedingungen der radikalischen wässrigen Emulsionspolymerisation zu Ende führen, so gibt man radilalischen Polymerisationsinitiator im Überschuß (relativ zur N-Oxyl-Radikalmenge) hinzu. Üblicherweise senkt man zugleich die Polymerisationstemperatur auf < 100°C ab und den Druck auf einen Wert unterhalb des Dampfdruckes der Mischung.

Die nach dem erfindungsgemäßen Verfahren erhältlichen partikelförmigen Polymerisate P können als Bestandteil thermoplastischer Formmassen F verwendet werden. In einer bevorzugten Ausführungsform enthalten die thermoplastischen Formmassen F, bezogen auf F,

P) 1 bis 99 Gew.-%, bevorzugt 10 bis 60 und besonders bevorzugt 10 bis 40 Gew.-%, der partikelförmigen Polymerisate P,

M) 1 bis 99 Gew.-%, bevorzugt 40 bis 90 und besonders bevorzugt 60 bis 90 Gew.-% eines thermoplastischen Matrixpolymerisates M mit einer Glasübergangstemperatur Tg oberhalb 25°C,

E) 0 bis 70 Gew.-%, bevorzugt 0 bis 50 und besonders bevorzugt 0 bis 35 Gew.-% einer Elastomerkomponente E aus einem kautschukelastischen Polymeren mit einer Glasübergangstemperatur Tg unterhalb 0°C, und

Z) 0 bis 50 Gew.-%, bevorzugt 0 bis 20 und besonders bevorzugt 0 bis 10 Gew.-% übliche Zusatzstoffe Z.

Als thermoplastisches Matrixpolymerisat M sind alle thermoplastischen Polymerisate mit einer Tg > 25°C geeignet. Beispielhaft seien nachfolgend einige solche Polymerisate M genannt.

In einer bevorzugten Ausführungsform enthält das Matrixpolymerisat M, bezogen auf M,

m1) 50 bis 100, bevorzugt 60 bis 95 und besonders bevorzugt 60 bis 90 Gew.-% einer Styrolverbindung der allgemeinen Formel (XI) wie weiter oben bereits beschrieben,
oder
eines ($C_1$-$C_8$-Alkyl)esters der Acrylsäure oder Methacrylsäure
oder Mischungen der Styrolverbindung und des ($C_1$-$C_8$-Alkyl)esters der Acrylsäure oder Methacrylsäure,

m2) 0 bis 40, vorzugsweise 5 bis 38 Gew.-% Acrylnitril oder Methacrylnitril oder deren Mischungen, und

m3) 0 bis 40, vorzugsweise 0 bis 30 Gew.-% von einem oder mehreren weiteren monoethylenisch ungesättigten, von m2) verschiedenen Monomeren.

Bevorzugt hat die Komponente M) eine Glasübergangstemperatur $T_g$ von 50°C oder darüber. M) ist demnach ein hartes Polymeres.

Als Styrolverbindung der allgemeinen Formel (XI) (Komponente m1)) setzt man vorzugsweise Styrol, α-Methylstyrol sowie außerdem mit $C_1$-$C_8$-Alkyl kernalkylierte Styrole wie p-Methylstyrol oder tert.-Butylstyrol, ein. Styrol ist besonders bevorzugt.

Anstelle der Styrolverbindungen oder in Mischung mit ihnen kommen $C_1$- bis $C_8$-Alkylester der Acrylsäure und/oder Methacrylsäure in Betracht, besonders solche, die sich vom Methanol, Ethanol, n- und iso-Propanol, sek.-, tert.- und iso-Butanol, Pentanol, Hexanol, Heptanol, Octanol, 2-Ethylhexanol und n-Butanol ableiten. Besonders bevorzugt ist Methylmethacrylat.

Weiterhin kann die Komponente M) auf Kosten der Monomeren m1) und m2) ein oder mehrere weitere, monoethylenisch ungesättigte Monomere m3) enthalten, welche die mechanischen und thermischen Eigenschaften von M) in einem gewissen Bereich variieren. Als Beispiele für solche Comonomere seien genannt:

N-substituierte Maleinimide wie N-Methyl-, N-Phenyl- und N-Cyclohexylmaleinimid;

Acrylsäure, Methacrylsäure, weiterhin Dicarbonsäuren wie Maleinsäure, Fumarsäure und Itaconsäure sowie deren Anhydride wie Maleinsäureanhydrid;

Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid und Methacrylamid;

aromatische und aliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat;

ungesättigte Ether wie Vinylmethylether,

sowie Mischungen dieser Monomeren.

Bevorzugte Komponenten M) sind beispielsweise:

M/1: Polymethylmethacrylat (PMMA) - in diesem Falle ist A) durch Polymerisation von 100 Gew.-% Methylmethacrylat (Komponente m1)) erhältlich,

M/2: Polymerisate, erhältlich durch Copolymerisation von 40 bis 90, bevorzugt 50 bis 80 Gew.-% Styrol und/oder α-Methylstyrol m1), mit 10 bis 60, bevorzugt 20 bis 40 Gew.-% Acrylnitril m2), sowie gegebenenfalls 0 bis 30, bevorzugt 0 bis 20 Gew.-% von weiteren monoethylenisch ungesättigten, von m2) verschiedenen Monomeren m3).

Enthält die Komponente M) bevorzugt Styrol und Acrylnitril, so entstehen die bekannten handelsüblichen SAN-Copolymeren. Sie haben in der Regel eine Viskositätszahl VZ (ermittelt nach DIN 53 726 bei 25°C, 0,5 Gew.-% in Dimethylformamid) von 40 bis 160 ml/g, entsprechend einer mittleren Molmasse von etwa 40000 bis 250000 (Gewichtsmittel).

Die Komponente M) kann man in an sich bekannter Weise, z.B. durch Substanz-, Lösungs- Suspensions-, Fällungs- oder Emulsionspolymerisation erhalten. Einzelheiten dieser Verfahren sind z.B. im Kunststoffhandbuch, Hrg. Vieweg und Daumiller, Carl-Hanser-Verlag München, Bd. 1 (1973), S. 37 bis 42 und Bd. 5 (1969), S. 118 bis 130, sowie in Ullmanns Encyklopädie der technischen Chemie, 4. Aufl., Verlag Chemie Weinheim, Bd. 19, S. 107 bis 158 "Polymerisationstechnik", beschrieben.

In einer anderen bevorzugten Ausführungsform ist das Polymerisat M Polyvinylchlorid PVC. Geeignete Polyvinylchloride sind an sich bekannt.

Als Monomeres für PVC kann entweder nur Vinylchlorid eingesetzt werden oder Mischungen von Vinylchlorid und anderen Monomeren (Comonomere) mit mindestens 40 Gew.-% Vinylchlorid, bezogen auf die Gesamtmasse der Monomeren. Als Comonomere des Vinylchlorids kommen insbesondere Vinylester, z.B. Vinylacetat, Vinylpropionat u. a., Vinylether wie Vinylmethylether, Vinylethylether, Vinylisobutylether u.a., Vinylidenchlorid, $C_1$-$C_{18}$-Alkylester der Acrylsäure wie Butylacrylat und 2-Ethylhexylacrylat, Dialkylmaleate wie Dibutylmaleat, Olefine wie Ethen, Propen, Isobuten und längerkettige $C_6$-$C_{15}$-Olefine, Diene wie Butadien sowie vinylaromatische Verbindungen wie Styrol in Betracht.

Man führt die Polymerisation des Vinylchlorids in an sich bekannter Art und Weise, z.B. als Emulsions-, Suspensions- oder Massepolymerisation, bevorzugt als Suspensionspolymerisation, durch, wobei die Polymerisation des

Vinylchlorids auch in Gegenwart von Emulsionspolymerisaten wie ein- oder mehrstufig hergestellten Polymeren auf Acrylatbasis (siehe beispielsweise DE-A 21 62 615, DE-B 20 13 020, DE-A 2 222 867, EP-A 222 127, EP-B 496 121) durchgeführt werden kann.

Im Falle der Suspensionspolymerisation können die bei der Herstellung von Polyvinylchlorid üblichen Schutzkolloide eingesetzt werden. Als monomerlösliche Initiatoren kommen bei der Suspensionspolymerisation übliche Peroxide, Perester, Percarbonate und Azoverbindungen in Betracht. Vor, während oder nach der Suspensionspolymerisation kann der pH-Wert durch Zugabe von Puffersalzen eingestellt werden.

Die Polymerisationstemperatur richtet sich nach dem gewünschten Molekulargewicht bzw. K-Wert des PVC-Produktes und liegt zwischen 20 und 100°C, vorzugsweise zwischen 35 und 80°C, für die meisten Produkte zwischen 45 und 70°C. Die Polymerisation wird im allgemeinen bei einem Umsatz von 60 bis 95 %, bevorzugt 70 bis 90 %, abgebrochen.

Die Polymerisation wird bei Drücken von 5 bis 30 bar durchgeführt, vorzugsweise bei 8 bis 20 bar, wobei der Druck im allgemeinen durch den Dampfdruck des Vinylchlorids bei der gewünschten Polymerisationstemperatur vorgegeben wird.

In einer anderen bevorzugten Ausführungsform ist das Polymerisat M ein Polycarbonat oder ein Polyester.

Geeignete Polycarbonate sind an sich bekannt. Sie sind z.B. entsprechend den Verfahren der DE-B-1 300 266 durch Grenzflächenpolykondensation oder gemäß dem Verfahren der DE-A-14 95 730 durch Umsetzung von Biphenylcarbonat mit Bisphenolen erhältlich. Bevorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynapthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan oder 4,4'-Dihydroxydiphenyl sowie Mischungen der vorgenannten Dihydroxyverbindungen.

Besonders bevorzugte Polycarbonate sind solche auf der Basis von Bisphenol A oder Bisphenol A zusammen mit bis zu 30 mol.-% der vorstehend genannten aromatischen Dihydroxyverbindungen.

Die relative Viskosität dieser Polycarbonate liegt im allgemeinen im Bereich von 1,1 bis 1,5, insbesondere 1,28 bis 1,4 (gemessen bei 25°C in einer 0,5 gew.-%igen Lösung in Dichlormethan).

Geeignete Polyester sind ebenfalls an sich bekannt und in der Literatur beschrieben. Sie enthalten einen aromatischen Ring in der Hauptkette, der von einer aromatischen Dicarbonsäure herrührt. Der aromatische Ring kann auch substituiert sein, z.B. durch Halogen wie Chlor und Brom oder durch $C_1$-$C_4$-Alkylgruppen wie Methyl-, Ethyl-, i- bzw. n-Propyl- und n-, i- bzw. tert.-Butylgruppen. Die Polyester können durch Umsetzung von aromatischen Dicarbonsäuren, deren Estern oder anderer esterbildender Derivate derselben mit aliphatischen Dihydroxyverbindungen in an sich bekannter Weise hergestellt werden.

Als bevorzugte Dicarbonsäuren sind Naphthalindicarbonsäure, Terephthalsäure und Isophthalsäure oder deren Mischungen zu nennen. Bis zu 10 mol.-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.

Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat, Polyethylennaphthalat und Polybutylenterephthalat bevorzugt. Die Viskositätszahl der Polyester liegt im allgemeinen im Bereich von 60 bis 200 ml/g (gemessen in einer 0,5 gew.-%igen Lösung in einem Phenol/o-Dichlorbenzolgemisch (Gew.-Verh. 1:1 bei 25°C)).

In einer anderen bevorzugten Ausführungsform enthalten die thermoplastischen Formmassen F neben dem partikelförmigen Polymerisat P und dem thermoplastischen Matrixpolymerisat M mit einer Tg oberhalb 25°C, eine Elastomerkomponente E. Bei dieser Elastomerkomponente E handelt es sich um kautschukelastische Polymere mit einer Glasübergangstemperatur Tg unter 0°C, bevorzugt unter -20°C.

Die Elastomerkomponente E kann beispielsweise aus folgenden Monomeren aufgebaut sein:

e1) konjugierte Diene wie Butadien, Isopren, Chloropen, bevorzugt Butadien,

e2) $C_1$-$C_{20}$-Alkylester der Acrylsäure oder der Methacrylsäure wie Butylacrylat und 2-Ethylhexylacrylat, bevorzugt Butylacrylat, sowie ggf. vernetzende Monomere wie die Allylester der Acrylsäure und der Methacrylsäure, und der Acrylsäureester des Tricyclodecenylalkohols (Dihydrodicyclopentadienylacrylat),

e3) Mischungen der Monomere e1) und e2) miteinander und/oder mit ethylenisch ungesättigten Comonomeren wie z.B. Styrolverbindungen (z.B. Styrol, $\alpha$-Methylstyrol), Acrylnitril oder Methacrylnitril.

Die Elastomerkoponente kann auch ein partikelförmiger Pfropfkautschuk sein, der beispielsweise einen Kern oder innere Schalen aus den polymerisierten Monomeren e1) bis e3) enthält, und eine äußere Schale aus "harten" Polymeren. Der Kern bzw. die inneren Schalen aus e1) bis e3) sind dabei kautschukelastisch, die äußere "harte" Schale verbessert die Verträglichkeit der Kautschukphase mit dem Matrixpolymerisat M.

Ist das Matrixpolymerisat M ein SAN-Polymeres und die Elastomerkoponente E ein partikelförmiger Polybutadienkautschuk mit SAN-Pfropfhülle, so handelt es sich bei diesem Polymeren um die dem Fachmann bekannten ABS-Formmassen. Derartige Formmassen sind beispielsweise in der DE-A 2427960, der EP-A 62901 und der EP-A 258741 beschrieben.

Ist das Matrixpolymerisat M ein SAN-Polymeres und die Elastomerkoponente E ein partikelförmiger Polyalkylacrylatkautschuk (z.B. vernetztes Polybutylacrylat) mit SAN-Pfropfhülle, so handelt es sich bei diesem Polymeren um die dem Fachmann bekannten ASA-Formmassen. Derartige Formmassen sind beispielsweise in der DE-A 1260135 und der DE-A 2826925 beschrieben.

Die Elastomerkoponente E wird nicht nach dem erfindungsgemäßen Verfahren, sondern in bekannter Weise durch klassische Masse-, Lösungs-, Suspensions-, Fällungs- oder Emulsionspolymerisation erhalten. Einzelheiten dieser klassischen Verfahren sind z.B. im Kunststoffhandbuch, Hrg. R. Vieweg und G. Daumiller, Bd. V "Polystyrol", Carl-Hanser-Verlag München 1969, S. 118 ff beschrieben, oder in den zuvor für die Komponente M) genannten Literaturstellen. Die erwähnten Pfropfkautschuke können z.B. bevorzugt in Emulsion, aber auch in Suspension, Masse oder Lösung hergestellt werden.

Aus dem Gesagten ergibt sich, daß die thermoplastischen Formmassen F beispielsweise ein übliches ABS- oder ASA-Polymer sein können, welches jedoch neben dem normalen partikelförmigen Pfropfkautschuk die erfindungsgemäßen partikelförmigen Polymerisate P als zweite diskrete Phase enthält.

Weiterhin können die thermoplastischen Formmassen F übliche Zusatzstoffe Z, wie z.B. Gleit- oder Entformungsmittel, Pigmente, Farbstoffe, Flammschutzmittel, Antioxidantien, Stabilisatoren gegen Lichteinwirkung, faser- und pulverförmige Füll- oder Verstärkungsmittel oder Antistatika, sowie andere Zusatzstoffe, oder deren Mischungen, enthalten.

Geeignete Gleit- und Entformungsmittel sind z.B. Stearinsäuren, Stearylalkohol, Stearinsäureester oder -amide sowie Siliconöle, Montanwachse und solche auf Basis von Polyethylen und Polypropylen.

Pigmente sind beispielsweise Titandioxid, Phthalocyanine, Ultramarinblau, Eisenoxide oder Ruß, sowie die Klasse der organischen Pigmente.

Unter Farbstoffen sind alle Farbstoffe zu verstehen, die zur transparenten, halbtransparenten oder nichttransparenten Einfärbung von Polymeren verwendet werden können, insbesondere solche, die zur Einfärbung von Styrolcopolymeren geeignet sind. Derartige Farbstoffe sind dem Fachmann bekannt.

Als Flammschutzmittel können z.B. die dem Fachmann bekannten halogenhaltigen oder phosphorhaltigen Verbindungen, Magnesiumhydroxid, sowie andere gebräuchliche Verbindungen, oder deren Mischungen verwendet werden.

Geeignete Antioxidantien (Wärmestabilisatoren) sind etwa sterisch gehinderte Phenole, Hydrochinone, verschiedene substituierte Vertreter dieser Gruppe, sowie deren Mischungen. Sie sind etwa als Topanol® oder Irganox® im Handel erhältlich.

Geeignete Stabilisatoren gegen Lichteinwirkung sind z.B. verschiedene substituierte Resorcine, Salicylate, Benzotriazole, Benzophenone, HALS {Hindered Amine Light Stabilizers), wie sie z.B. als Tinuvin® kommerziell erhältlich sind.

Als Beispiele für faserförmige bzw. pulverförmige Füllstoffe seien Kohlenstoff- oder Glasfasern in Form von Glasgeweben, Glasmatten oder Glasseidenrovings, Schnittglas, Glaskugeln sowie Wollastonit genannt, besonders bevorzugt Glasfasern. Bei der Verwendung von Glasfasern können diese zur besseren Verträglichkeit mit den Blendkomponenten mit einer Schlichte und einem Haftvermittler ausgerüstet sein. Die Einarbeitung der Glasfasern kann sowohl in Form von Kurzglasfasern als auch in Form von Endlossträngen (Rovings) erfolgen.

Als teilchenförmige Füllstoffe eignen sich Ruß, amorphe Kieselsäure, Magnesiumcarbonat (Kreide), gepulverter Quarz, Glimmer, Mica, Bentonite, Talkum, Feldspat oder insbesondere Caiciumsilikate wie Wollastonit und Kaolin.

Geeignete Antistatika sind beispielsweise Aminderivate wie N,N-Bis(hydroxyalkyl)alkylamine oder -alkylenamine, Polyethylenglycolester und Glycerinmono- und -distearate, sowie deren Mischungen.

Die einzelnen Zusatzstoffe Z werden in den jeweils üblichen Mengen verwendet, so daß sich nähere Angaben hierzu erübrigen.

Die thermoplastischen Formmassen F werden hergestellt, indem man die Komponenten P und M, sowie gegebenenfalls E und Z, in einer geeigneten Mischvorrichtung vermischt und bei geeigneten Temperaturen zu einer Formmasse verarbeitet. Die Herstellung der Formmassen F kann nach an sich bekannten Mischverfahren erfolgen, beispielsweise unter Aufschmelzen in einem Extruder, Banbury-Mischer, Kneter, Walzenstuhl oder Kalander. Die Komponenten können jedoch auch "kalt" verwendet werden und das pulvrige oder aus Granulaten bestehende Gemisch

wird erst bei der Verarbeitung aufgeschmolzen und homogenisiert.

Üblicherweise erfolgt Vermischen bei Temperaturen von 130 bis 350°C.

Falls die partikelförmigen Polymerisate P noch Restfeuchte enthalten, so kann die Herstellung der Formmassen F vorteilhaft auf einem Extruder erfolgen, in dem die Restfeuchte durch Entwässerungsöffnungen als flüssiges Wasser und/oder durch Entgasungsöffnungen als Dampf entfernt wird.

Aus den partikelförmigen Polymerisaten P und insbesondere aus den Formmassen F lassen sich Formkörper aller Art, auch Folien, herstellen.

Beispiele:

Bei der Angabe der mittleren Teilchengröße d handelt es sich um das Gewichtsmittel der Teilchengröße, wie sie mittels einer analytischen ültrazentrifuge entsprechend der Methode von W. Scholtan und H. Lange, Kolloid-Z. und Z.-Polymere 250 (1972) Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der gewichtsmittlere Teilchendurchmesser $d_{50}$ gibt denjenigen Teilchendurchmesser an, bei dem 50 Gew.-% aller Teilchen einen größeren und 50 Gew.-% einen kleineren Teilchendurchmesser aufweisen.

Untersucht wurden jeweils drei Probensereien, die bei unterschiedlichen Verarbeitungstemperaturen hergestellt worden waren. Angegeben ist jeweils der Mittelwert aus der Prüfung von 10 Proben je Probensereie.

Die Feststoffgehalte der Emulsionen bezeichnen den Gehalt aller Feststoffanteile in Gew.-%, bezogen auf die Gesamtmasse der jeweiligen Emulsion. Die Druckangaben sind Absolutdrucke.

Die Monomeren und Polymerisationshilfsstoffe wurden ohne weitere Reinigung in Form ihrer Handelsprodukte verwendet. Kommerziell erhältliches 4-Hydroxy-2,2,6,6-tetramethyl-1-piperidinyloxy (4-Hydroxy-TEMPO, Hüls AG) wurde ohne zusätzliche Reinigung eingesetzt.

Die molale Löslichkeit von 4-Hydroxy-TEMPO in Wasser betrug bei 25°C und 1 atm $3.25 \cdot 10^{-3}$ mol/kg.

Herstellung eines teilchenförmigen Modifiers

1) Grundstufe

1500 g Wasser, 32 g eines Saatlatex aus Polystyrol ($d_{50}$=85 nm, Feststoffgehalt 39 Gew.-%), 371 g Styrol, 3,8 g Acrylsäureester des Tricyclodecenylalkohols, 9,5 g Na-Salz einer $C_{12}$-bis $C_{18}$-Paraffinsulfonsäure, 3,8 g Kaliumperoxodisulfat, 3,6 g 4-Hydroxy-TEMPO, 4,7 g Natriumhydrogencarbonat und 0,3 g Natrimpyrophosphat wurden in einem Druckkessel vorgelegt. Mit Stickstoffgas wurde ein Vordruck von 4 bar eingestellt und das Polymerisationsgemisch auf 95°C erwärmt. Man hielt 30 min bei dieser Temperatur. Danach wurde die Temperatur auf 120°C erhöht, wobei sich ein Druck von ca. 7 bar einstellte, und 12 h polymerisiert (Feststoffgehalt 10,9 Gew.-%, $d_{50}$=125 nm). Danach wurde ein Gemisch aus 198 g n-Butylacrylat und 2 g Acrylsäureester des Tricyclodecenylalkohols zugegeben und weitere 12 h bei 120°C und einem sich einstellenden Druck von 7 bar polymerisiert (Feststoffgehalt 18 Gew.-%, $d_{50}$=215 nm).

Danach wurde auf 70°C gekühlt (wobei sich ein Druck von ca. 4,5 bar einstellte) und 5 g Kaliumperoxodisulfat zugegeben, um die Polymerisation in klassischer Fahrweise bis zu 100 % Umsatz zu führen (Feststoffgehalt 27,2 Gew.-%, $d_{50}$= 240 nm).

Die so erhaltene Dispersion wurde in 2 Teile geteilt.

2a) Variante A

In 1050 g der Disperion der Grundstufe wurden bei 70°C 0,5 g Kaliumperoxodisulfat und 0,4 g Natriumhydrogencarbonat gelöst und innerhalb von 2 h 115 g eines Gemisches aus 75 Gew.-Teilen Styrol und 25 Gew.-Teilen Acrylnitril zugetropft. Es wurde ohne Überdruck gearbeitet. Die Dispersion wurde 2 h nachgerührt ($d_{50}$=265 nm, Feststoffgehalt 34 Gew.-%).

2b) Variante B

In 1050 g der Dispersion der Grundstufe wurden in einem Druckkessel bei 70°C 0,5 g Kaliumperoxodisulfat, 0,27 g 4-Hydroxy-TEMPO und 0,4 g Natriumhydrogencarbonat gelöst und 115 g eines Gemisches aus 75 Gew.-Teilen Stryol und 25 Gew.-Teilen Acrylnitril zugegeben. Mit Stickstoffgas wurde ein Vordruck von 3,5 bar eingestellt, und das Polymerisationsgemisch auf 95°C erwärmt. Man hielt 30 min bei dieser Temperatur. Danach wurde die Temperatur auf 120°C erhöht, wobei sich ein Druck von ca. 7 bar einstellte, und 12 h polymerisiert ($d_{50}$ = 252 nm, Feststoffgehalt 31 Gew.-%). Danach wurde die Temperatur auf 70°C gesenkt (wobei sich ein Druck von ca. 4,5 bar einstellte), weitere

0,8 g Kaliumperoxodisulfat zugegeben und 2 h in klassischer Fahrweise nachpolymerisiert ($d_{50}$=264 nm, Feststoffgehalt = 33,9 %).

3) Vergleichsversuch

Die zuvor beschriebenen Versuche wurden wiederholt, ohne Anlegen eines Vordrucks (kein Einpressen von Stickstoffgas) bei der Grundstufe und bei der Variante B. In allen Fällen wurden instabile Disperisonen erhalten mit starker Koagulatbildung.

Die Pfropfpolymerisate wurden mittels Calciumchloridlösung bei 95°C aus der Emulsion gefällt, mit Wasser gewaschen und im warmen Luftstrom getrocknet.

In den Beispielen wurde ein partikelförmiges Polymerisat mit Kern/Schale-Morphologie hergestellt. Die Grundstufe (Kern) wurde nach dem erfindungsgemäßen Verfahren hergestellt: Verwendung von 4-Hydroxy-TEMPO als N-Oxyl-Radikal und von Kaliumperoxodisulfat als Radikalstarter, Temperatur > 100°C, Druck im Polymerisationsgefäß > Dampfdruck der Mischung. In der Endphase wurde durch Zugabe eines Initiator-Überschusses und Absenken der Temperatur auf < 100°C nach dem Verfahren der klassischen radikalischen Emulsionspolymerisation zu Ende polymerisiert.

Die Pfropfstufe (Schale) wurde in Variante A durch klassische radikalische Emulsionspolymerisation hergestellt: ohne N-Oxyl-Radikal. Temperatur < 100°C, drucklos.

In Variante B wurde die Pfropfstufe zunächst nach dem erfindungsgemäßen Verfahren hergestellt: Verwendung von 4-Hydroxy-TEMPO und Kaliumperoxodisulfat, Temperatur > 100°C, Druck im Kessel > Dampfdruck der Mischung. In der Endphase von Variante B wurde durch Zugabe eines Initiator-Überschusses und Absenken der Temperatur auf < 100°C nach dem Verfahren der klassischen radikalischen Emulsionspolymerisation zu Ende polymerisiert.

## Patentansprüche

1. Verfahren zur Herstellung von partikelförmigen Polymerisaten P durch radikalisch initiierte wäßrige Emulsionspolymerisation, bei dem wenigstens ein ethylenisch ungesättigtes Monomer mittels Dispergiermittel in wäßrigem Medium emulgiert und mittels eines radikalischen Polymerisationsinitiators im Beisein eines stabilen N-Oxyl-Radikals polymerisiert wird, wobei eine wässrige Polymerisatdispersion entsteht, wobei

   a) als radikalischer Polymerisationsinitiator ein Peroxid, ein Hydroperoxid und/oder eine Azoverbindung verwendet wird, deren molale Löslichkeit bei 25°C und 1 bar in Wasser größer oder gleich der entsprechenden molalen Löslichkeit von tert.-Butylhydroperoxid in Wasser ist und deren zerfallstemperatur im Polymerisationsmedium < 100°C beträgt, und als stabiles N-Oxyl-Radikal wenigstens eine Verbindung der nachstehenden allgemeinen Formeln II bis IX verwendet wird:

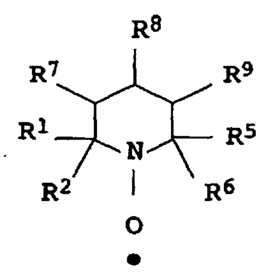
(II),

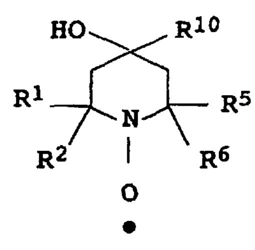
(III),

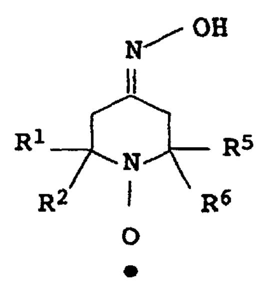
(IV),

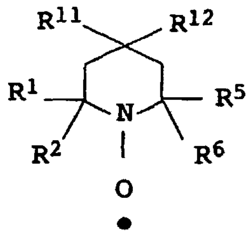

(V),

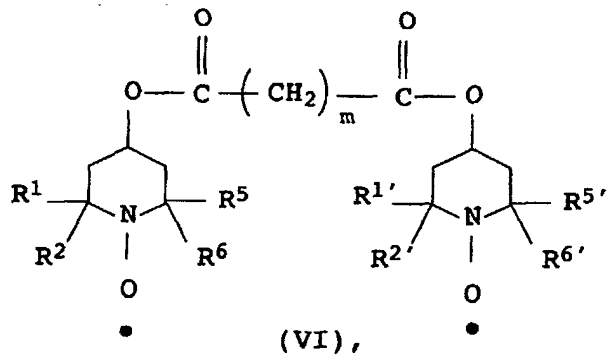

(VI),

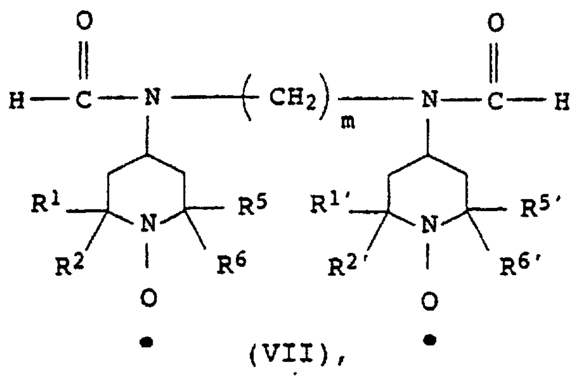

(VII),

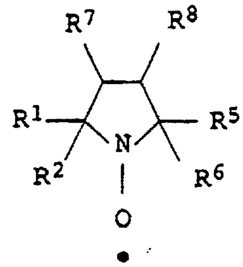

(VIII),

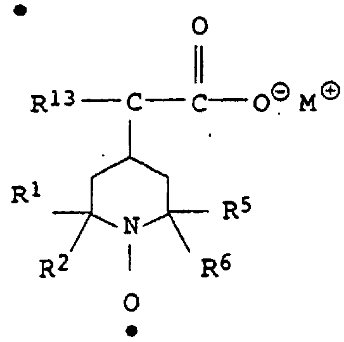

(IX),

mit

m = 2 bis 10,

$R^7, R^8, R^9$ = unabhängig voneinander

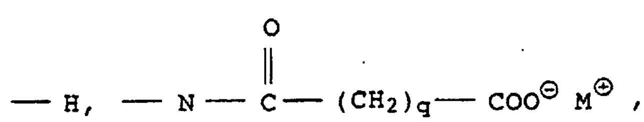

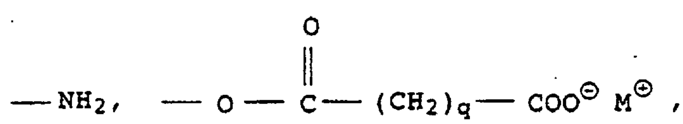

$-COO^{\ominus} M^{\oplus}$, $-SO_3^{\ominus} M^{\oplus}$, $-PO_3^{\ominus} M^{\oplus}$,

$-O-PO_3^{2\ominus}M_2^{\oplus}$, $-O-SO_3^{\ominus}M^{\oplus}$, $-OH$,

$-O-(CH_2-CH_2-O)_q H$

oder

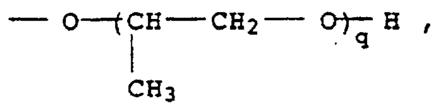

mit der Maßgabe, daß wenigstens einer der vorhandenen Substituenten $R^7$, $R^8$ oder $R^9$ von Wasserstoff verschieden ist,

$M^{\oplus}$ = Wasserstoff- oder ein Alkalimetallion,

q = eine ganze Zahl von 1 bis 10,

$R^1$, $R^2$, $R^5$, $R^6$ = unabhängig voneinander diesselbe oder verschiedene gerad- oder verzweigtkettige, gegebenenfalls substituierte Alkylgruppen,

$R^{1'}$,$R^{2'}$,$R^{5'}$,$R^{6'}$ = unabhängig voneinander und unabhängig von $R^1$, $R^2$, $R^5$, $R^6$ dieselben Gruppen wie $R^1$,

$R^{10}$ = $C_1$- bis $C_4$-Alkyl, $-CH=CH_2$, -C CH, -CN,

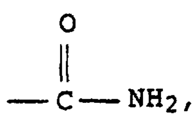

$-COO^{\ominus}M^{\oplus}$, $-COOCH_3$ oder $-COOC_2H_5$,

$R^{11}$ = ein organischer Rest, der wenigstens eine primäre, sekundäre oder tertiäre Aminogruppe oder wenigstens eine Ammoniumgruppe aufweist,

$R^{12}$ = unabhängig von $R^{11}$ dieselben Gruppen wie $R^{11}$ oder -H, -OH, $C_1$- bis $C_4$-Alkyl, $-COO^{\ominus}M^{\oplus}$, -C CH,

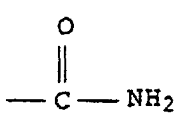 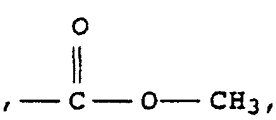 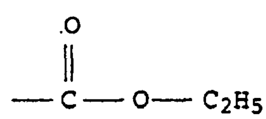

oder hydroxysubstituiertes $C_1$- bis $C_4$-Alkyl und

$R^{13}$ =

$-H$, $-CH_3$ oder 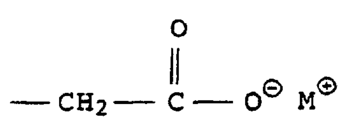 ,

b) die radikalisch initiierte wäßrige Emulsionspolymerisation bei einer Temperatur oberhalb von 100°C durchgeführt wird,

c) die radikalisch initiierte wäßrige Emulsionspolymerisation bei Drücken durchgeführt wird, die oberhalb des Dampfdrucks des im Polymerisationsgefäß befindlichen Polymerisationsgemisches liegen, und

d) die erhaltene wässrige Polymerisatdispersion auf die partikelförmigen Polymerisate P aufgearbeitet wird, indem das wässrige Medium ganz oder teilweise abgetrennt wird, oder die erhaltene wässrige Polymerisatdispersion als solche weiterverarbeitet wird.

2. Verfahren nach Anspruch 1, **dadurch gekennzeichnet, daß** als stabiles N-Oxyl-Radikal wenigstens ein Vertreter aus der Gruppe umfassend 4-Hydroxy-2,2,6,6-tetramethyl-1-oxyl-piperidin, 4-Hydroxy-2,6-diphenyl-2,6-dimethyl-1-oxyl-piperidin, 4-Carboxy-2,2,6,6-tetramethyl-l-oxyl-piperidin, 4-Carboxy-2,6-diphenyl-2,6-dimethyl-1-oxyl-piperidin, 3-Carboxy-2,2,5,5-tetramethyl-1-oxyl-pyrrolidin, 3-Carboxy-2,5-diphenyl-2,5-dimethyl-1-oxyl-pyrrolidin und das Natrium-, Ammonium- sowie das Kaliumsalz des Schwefelsäurehalbesters des 4-Hydroxy-2,2,6,6-tetramethyl-1-oxyl-piperidin verwendet wird.

3. Verfahren nach Anspruch 1 oder 2, **dadurch gekennzeichnet, daß** das ethylenisch ungesättigte Monomere ausgewählt ist aus

- Styrolverbindungen der allgemeinen Formel (XI)

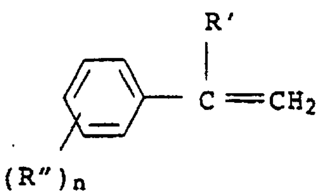

(XI)

in der R' und R" unabhängig voneinander für H oder $C_1$-$C_8$-Alkyl und n für 0,1,2 oder 3 stehen,
- $C_1$-$C_{20}$-Alkylestern der Acrylsäure oder Methacrylsäure,
- Dienen mit konjugierten Doppelbindungen,
- ethylenisch ungesättigten Dicarbonsäuren und deren Derivaten, und
- ethylenisch ungesättigten Nitrilverbindungen.

4. Verfahren nach Anspruch 3, **dadurch gekennzeichnet, daß** das ethylenisch ungesättigte Monomere ausgewählt ist aus

- Styrol, $\alpha$-Methylstyrol und Divinylbenzol,
- n-Butylacrylat, 2-Ethylhexylacrylat und Methylmethacrylat,
- 1,3-Butadien, und
- Acrylnitril.

5. Verfahren nach einem der Ansprüche 1 bis 4, **dadurch gekennzeichnet, daß** als radikalischer Polymerisationsinitiator Peroxodischwefelsäure und/oder eines ihrer Alkalimetallsalze mitverwendet wird.

6. Verfahren nach einem der Ansprüche 1 bis 5, **dadurch gekennzeichnet, daß** die Polymerisationstemperatur > 100 bis 180°C beträgt.

7. Verfahren nach einem der Ansprüche 1 bis 6, **dadurch gekennzeichnet, daß** der Polymerisationsdruck 2 bis 20 bar beträgt.

8. Verfahren nach einem der Ansprüche 1 bis 7, **dadurch gekennzeichnet, daß** man das Polymerisationsgemisch bei einer unterhalb 100°C liegenden Temperatur ins Polymerisationsgefäß vorlegt, bei dieser Temperatur einen oberhalb des Dampfdruckes des Polymerisationsgemisches liegenden Druck einstellt und anschließend das geschlossene Polymerisationsgefäß auf die oberhalb 100°C liegende Polymerisationstemperatur erwärmt und polymerisiert.

**9.** Partikelförmige Polymerisate P, erhältlich nach dem Verfahren gemäß Anspruch 1 bis 8.

**10.** Thermoplastische Formmassen F, enthaltend als Komponenten, bezogen auf F,

P) 1 bis 99 Gew.-% der partikelförmigen Polymerisate P gemäß Anspruch 9,

M) 1 bis 99 Gew.-% eines thermoplastischen Matrixpolymerisates M mit einer Glasübergangstemperatur Tg oberhalb 25°C,

E) 0 bis 70 Gew.-% einer Elastomerkomponente E aus einem kautschukelastischen Polymeren mit einer Glasübergangstemperatur Tg unterhalb 0°C, und

Z) 0 bis 50 Gew.-% übliche Zusatzstoffe Z.

**11.** Verfahren zur Herstellung der thermoplastischen Formmassen F gemäß Anspruch 10, **dadurch gekennzeichnet, daß** man die Komponenten P und M, sowie - sofern vorhanden- E und Z, in einer geeigneten Mischvorrichtung vermischt und bei geeigneten Temperaturen zu einer Formmasse verarbeitet.

**12.** Verwendung der partikelförmigen Polymerisate P nach Anspruch 9 als schlagzähigkeitsverbessernden Zusatz zu thermoplastischen Formmassen.

**13.** Verwendung der thermoplastischen Formmassen F nach Anspruch 10 zur Herstellung von Formkörpern und Folien.

**14.** Formkörper und Folien aus thermoplastischen Formmassen F gemäß Anspruch 10.

**Claims**

**1.** A process for the preparation of particulate polymers P by radical aqueous emulsion polymerization, in which at least one ethylenically unsaturated monomer is emulsified by means of a dispersant in an aqueous medium and is polymerized by means of a radical polymerization initiator in the presence of a stable N-oxyl radical, an aqueous polymer dispersion being formed, wherein

a) the radical polymerization initiator used is a peroxide, a hydroperoxide or an azo compound whose molal solubility at 25°C and 1 bar in water is greater than or equal to the corresponding molal solubility of tert-butyl hydroperoxide in water and whose decomposition temperature in the polymerization medium is < 100°C, and the stable N-oxyl radical used is at least one compound of the following formulae II to IX:

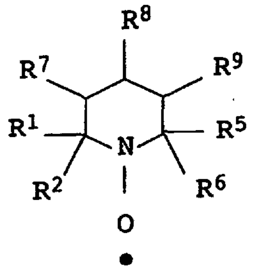
(II),

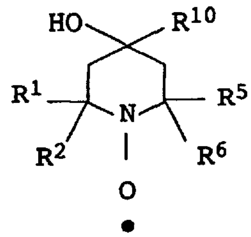
(III),

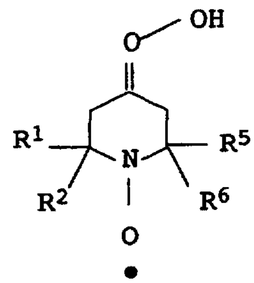
(IV),

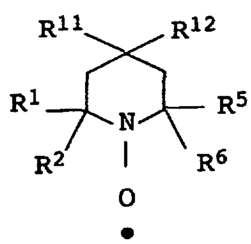
(V),

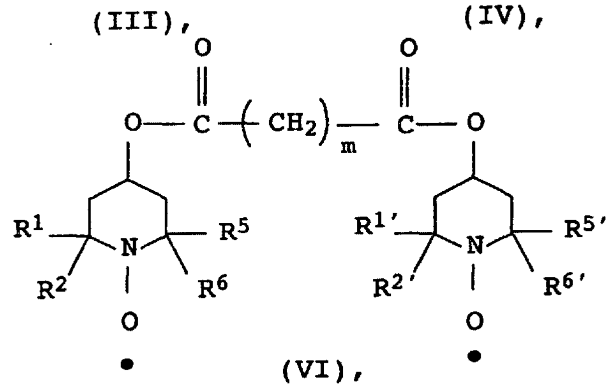
(VI),

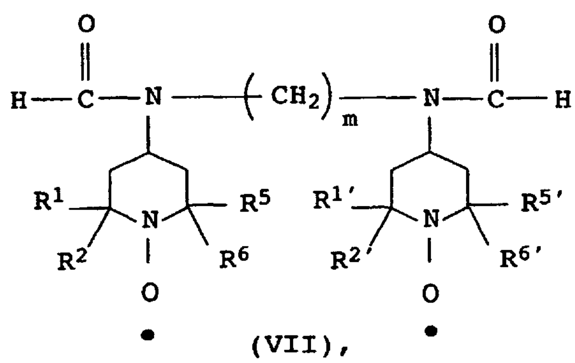
(VII),

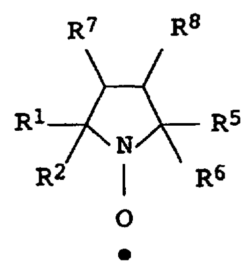
(VIII),

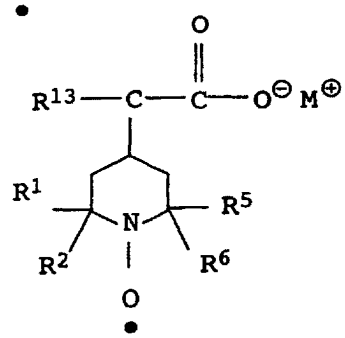
(IX),

where

m is from 2 to 10,

$R^7$,$R^8$ and $R^9$, independently of one another, are each

$-H$, 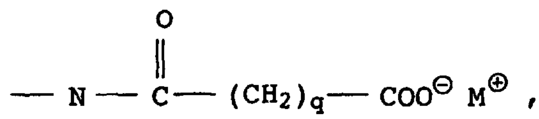

$-NH_2$, 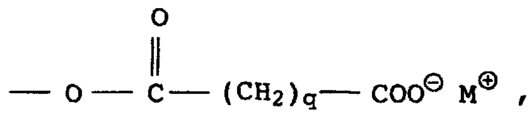

$-COO^{\ominus} M^{\oplus}$, $-SO_3^{\ominus} M^{\oplus}$, $-PO_3^{\ominus} M^{\oplus}$,

$-O-PO_3^{2\ominus} M_2^{\oplus}$, $-O-SO_3^{\ominus} M^{\oplus}$, $-OH$,

$-O-(CH_2-CH_2-O)_q H$

or

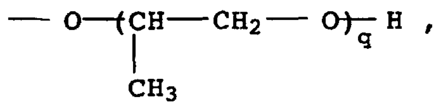

with the proviso that at least one of the substituents $R^7$, $R^8$ or $R^9$ present is not hydrogen,

| | |
|---|---|
| $M^{\oplus}$ | is a hydrogen ion or an alkali metal ion, |
| q | is an integer from 1 to 10, |
| $R^1$, $R^2$, $R^5$ and $R^6$, | independently of one another, are the same or different straight-chain or branched, unsubstituted or substituted alkyl groups, |
| $R^{1'}$,$R^{2'}$,$R^{5'}$ and $R^{6'}$, | independently of one another, and independently of $R^1$, $R^2$, $R^5$ and $R^6$, are the same group as $R^1$, |
| $R^{10}$ | is $C_1$-$C_4$-alkyl, $-CH=CH_2$, -C CH, -CN, |

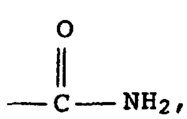

$-COO^{\ominus}M^{\oplus}$, $-COOCH_3$ or $-COOC_2H_5$,

| | |
|---|---|
| $R^{11}$ | is an organic radical which has at least one primary, secondary or tertiary amino group and at least one ammonium group, |
| $R^{12}$, | independently of $R^{11}$, is the same group as $R^{11}$ or is -H, -OH, $C_1$-$C_4$-alkyl, $-COO^{\ominus}M^{\oplus}$, -C CH, |

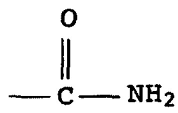, 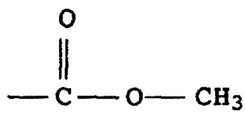, 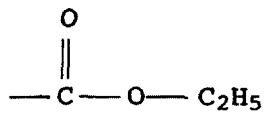

or hydroxyl-substituted $C_1$-$C_4$-alkyl and

$R^{13}$ =

$-H$, $-CH_3$ or 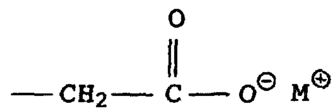 ,

b) the radical aqueous emulsion polymerization is carried out at above 100°C,

c) the radical aqueous emulsion polymerization is carried out at pressures which are above the vapor pressure of the polymerization mixture present in the polymerization vessel, and

d) the aqueous polymer dispersion obtained is worked up to obtain the particulate polymers P by separating off some or all of the aqueous medium, or said polymer dispersion is further processed as such.

**2.** A process as claimed in claim 1, wherein the stable N-oxyl radical used is at least one member selected from the group consisting of 4-hydroxy-2,2,6,6-tetramethyl-1-oxylpiperidine, 4-hydroxy-2,6-diphenyl-2,6-dimethyl-1-oxylpiperidine, 4-carboxy-2,2,6,6-tetramethyl-1-oxylpiperidine, 4-carboxy-2,6-diphenyl-2,6-dimethyl-1-oxylpiperidine, 3-carboxy-2,2,5,5-tetramethyl-1-oxylpyrrolidine, 3-carboxy-2,5-diphenyl-2,5-dimethyl-l-oxylpyrrolidine and the sodium, ammonium and potassium salt of the sulfuric half-ester of 4-hydroxy-2,2,6,6-tetramethyl-1-oxylpiperidine.

**3.** A process as claimed in either of claims 1 and 2, wherein the ethylenically unsaturated monomer is selected from

- styrene compounds of the formula (XI)

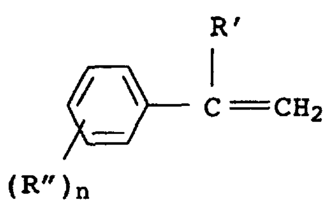

(XI)

where R' and R", independently of one another, are each H or $C_1$-$C_8$-alkyl and n is 0, 1, 2 or 3,

- $C_1$-$C_{20}$-alkyl esters of acrylic acid or methacrylic acid,
- dienes having conjugated double bonds,
- ethylenically unsaturated dicarboxylic acids and derivatives thereof and
- ethylenically unsaturated nitrile compounds.

**4.** A process as claimed in claim 3, wherein the ethylenically unsaturated monomer is selected from

- styrene, α-methylstyrene and divinylbenzene,
- n-butyl acrylate, 2-ethylhexyl acrylate and methyl methacrylate,
- 1,3-butadiene and
- acrylonitrile.

**5.** A process as claimed in any of claims 1 to 4, wherein peroxodisulfuric acid or one of its alkali metal salts is concomitantly used as a radical polymerization initiator.

**6.** A process as claimed in any of claims 1 to 5, wherein the polymerization temperature is from > 100 to 180°C.

7. A process as claimed in any of claims 1 to 6, wherein the polymerization pressure is from 2 to 20 bar.

8. A process as claimed in any of claims 1 to 7, wherein the polymerization mixture is initially taken in the polymerization vessel at below 100°C, a pressure above the vapor pressure of the polymerization mixture is established at this temperature and the closed polymerization vessel is then heated to the polymerization temperature which is above 100°C and polymerization is carried out.

9. A particulate polymer P obtainable by a process as claimed in any of claims 1 to 8.

10. A thermoplastic molding material F containing as components, based on F,

P) from 1 to 99% by weight of the particulate polymers P as claimed in claim 9,

M) from 1 to 99% by weight of a thermoplastic matrix polymer M having a glass transition temperature Tg above 25°C,

E) from 0 to 70% by weight of an elastomer component E comprising an elastomeric polymer having a glass transition temperature Tg below 0°C and

Z) from 0 to 50% by weight of conventional additives Z.

11. A process for the preparation of a thermoplastic molding material F as claimed in claim 10, wherein the components P and M and - if present - E and Z are mixed in a suitable mixing apparatus and processed at suitable temperatures to give a molding material.

12. The use of a particulate polymer P as claimed in claim 9 as an impact modifier in thermoplastic molding materials.

13. The use of a thermoplastic molding material F as claimed in claim 10 for the production of moldings and films.

14. A molding or film comprising a thermoplastic molding material F as claimed in claim 10.

## Revendications

1. Procédé de préparation de polymères P sous forme de particules, au moyen d'une polymérisation, amorcée par voie radicalaire, en émulsion aqueuse, dans lequel on émulsionne, en milieu aqueux, au moins un monomère à insaturation éthylénique, au moyen d'un agent de dispersion, et on le polymérise au moyen d'un amorceur radicalaire de polymérisation, en présence d'un radical N-oxyle stable, et dans lequel on obtient une dispersion polymère aqueuse, où

a) on met en oeuvre, en tant qu'amorceur radicalaire de polymérisation, un peroxyde, un hydroperoxyde et/ou un composé azoïque présentant une solubilité molale dans l'eau, à une température de 25°C et à une pression de 1 bar, supérieure ou égale à la solubilité molale, dans les même conditions, du tert.-butylhydroperoxyde dans l'eau, et présentant une température de dissociation dans le milieu de polymérisation inférieure à 100°C, et où on met en oeuvre, en tant que radical N-oxyle stable, au moins un composé de formules générales II à IX suivantes :

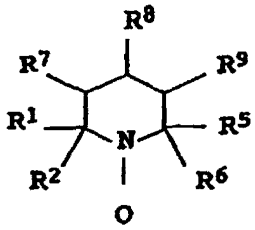

(II),

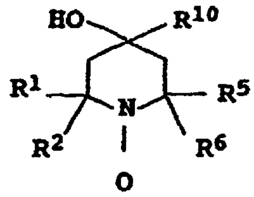

(III),

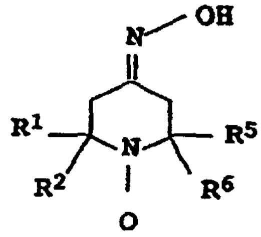

(IV),

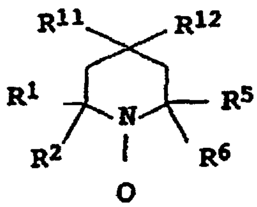

(V),

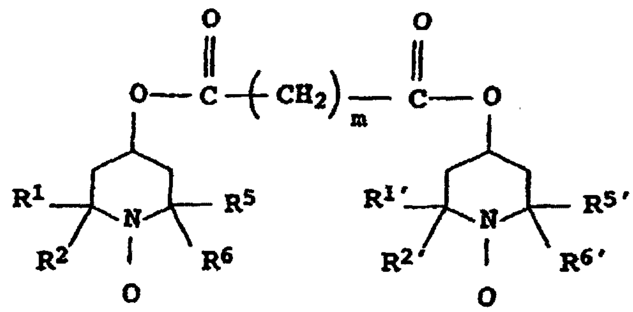

(VI),

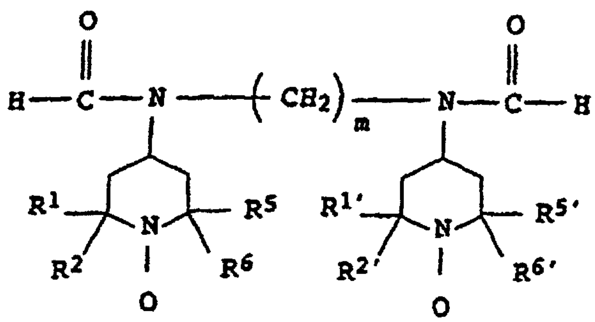

(VII),

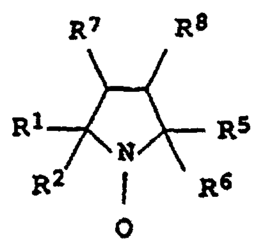

(VIII),

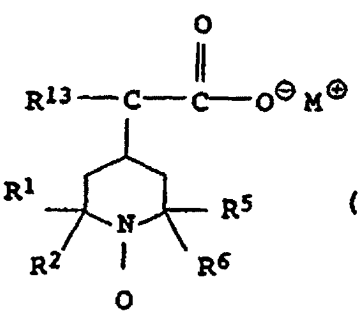

(IX),

dans lesquelles

m vaut de 2 à 10,

$R^7$, $R^8$, $R^9$ représentent, indépendamment les uns des autres :

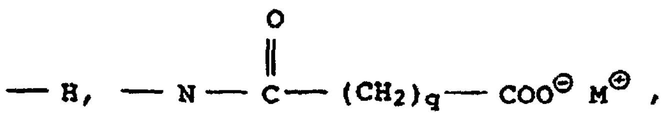

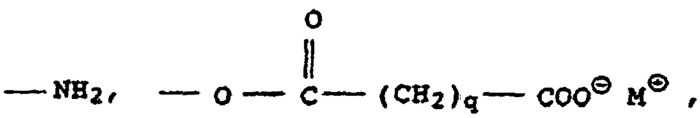

$-COO^{\ominus} M^{\oplus}$, $-SO_3^{\ominus} M^{\oplus}$, $-PO_3^{\ominus} M^{\oplus}$,

$-O-PO_3^{2\ominus} M_2^{\oplus}$, $-O-SO_3^{\ominus} M^{\oplus}$, $-OH$,

$-O-(CH_2-CH_2-O)_q-H$

ou

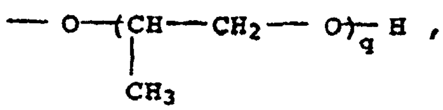

à condition qu'au moins un des substituants $R^7$, $R^8$ ou $R^9$ présents soit différent d'un atome d'hydrogène,

| | |
|---|---|
| $M^+$ | représente un ion d'hydrogène ou de métal alcalin, |
| q | représente un nombre entier compris entre 1 et 10, |
| $R^1$, $R^2$, $R^5$, $R^6$ | sont identiques ou différents et représentent, indépendamment les uns des autres, un groupe alkyle à chaîne linéaire ou ramifiée, qui est éventuellement substitué, |
| $R^{1'}$, $R^{2'}$, $R^{5'}$, $R^{6'}$ | représentent, indépendamment les uns des autres et indépendamment de $R^1$, $R^2$, $R^5$, $R^6$, les mêmes groupes que $R^1$, |
| $R^{10}$ | représente un groupe alkyle en $C_1$ à $C_4$, $-CH=CH_2$, $-C\equiv CH$, -CN, |

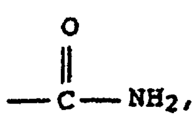

-COO-M+, $-COOCH_3$ ou $-COOC_2H_5$,

| | |
|---|---|
| $R^{11}$ | représente un reste organique présentant au moins un groupe amino primaire, secondaire ou tertiaire, ou au moins un groupe ammonium, |
| $R^{12}$ | représente, indépendamment de $R^{11}$, les mêmes groupes que $R^{11}$, ou bien -H, -OH, un groupe alkyle en $C_1$ à $C_4$, $-COO^-M^+$, $-C\equiv CH$, |

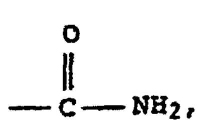, 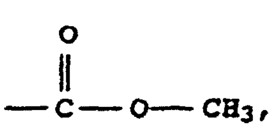, 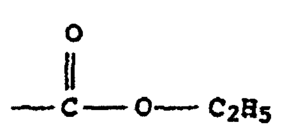,

ou un groupe alkyle en $C_1$ à $C_4$ substitué par un groupe hydroxy, et

$R^{13}$ représente -H, $-CH_3$, ou

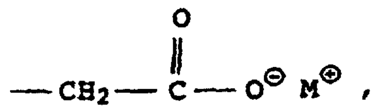

b) on réalise la polymérisation, amorcée par voie radicalaire, d'une émulsion aqueuse, à une température supérieure à 100°C,

c) on réalise la polymérisation, amorcée par voie radicalaire, d'une émulsion aqueuse, à des pressions supérieures à la pression de la vapeur du mélange de polymérisation disposé dans le récipient de polymérisation, et

d) on applique la dispersion polymère aqueuse obtenue, sur les polymères P sous forme de particules, au moyen d'une séparation complète ou partielle du milieu aqueux, ou on soumet telle quelle, la dispersion de polymère aqueuse obtenue à un traitement ultérieur.

**2.** Procédé selon la revendication 1, **caractérisé en ce que** l'on met en oeuvre, en tant que radical N-oxyle stable, au moins un composé du groupe formé par la 4-hydroxy-2,2,6,6-tétraméthyl-1-oxyl-pipéridine, la 4-hydroxy-2,6-diphényl-2,6-diméthyl-1-oxyl-pipéridine, la 4-carboxy-2,2,6,6-tétraméthyl-1-oxyl-pipéridine, la 4-carboxy-2,6-diphényl-2,6-diméthyl-1-oxyl-pipéridine, la 3-carboxy-2,2,5,5-tétraméthyl-1-oxyl-pyrrolidine, la 3-carboxy-2,5-diphényl-2,5-diméthyl-1-oxyl-pyrrolidine et le sel de sodium, le sel d'ammonium ainsi que le sel de potassium de l'hémiester de l'acide sulfurique de la 4-hydroxy-2,2,6,6-tétraméthyl-1-oxyl-pipéridine.

**3.** Procédé selon la revendication 1 ou 2, **caractérisé en ce que** l'on choisit le monomère à insaturation éthylénique dans le groupe formé par

- les composés styrène de formule générale (XI)

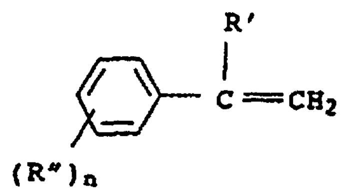

(XI)

dans laquelle R' et R" représentent, indépendamment l'un de l'autre, un atome d'hydrogène ou un groupe alkyle en $C_1$ à $C_8$, et n vaut 0, 1, 2 ou 3,
- les esters (alkyliques en $C_1$ à $C_{20}$) de l'acide acrylique ou de l'acide méthacrylique,
- les diènes présentant des doubles liaisons conjuguées,
- les diacides carboxyliques à insaturation éthylénique et leurs dérivés, et
- les composés nitriles à insaturation éthylénique.

**4.** Procédé selon la revendication 3, **caractérisé en ce que** l'on choisit le monomère à insaturation éthylénique dans le groupe formé par

- le styrène, le α-méthylstyrène et le divinylbenzène,
- l'acrylate de n-butyle, l'acrylate de 2-éthylhexyle et le méthacrylate de méthyle,
- le 1,3-butadiène et
- l'acrylonitrile.

**5.** Procédé selon l'une quelconque des revendications 1 à 4, **caractérisé en ce que** l'on procède à une co-utilisation de l'acide peroxodisulfurique et/ou d'un de ses sels de métal alcalin, en tant qu'amorceur radicalaire de polymérisation.

**6.** Procédé selon l'une quelconque des revendications 1 à 5, **caractérisé en ce que** la température de polymérisation

est comprise dans la gamme d'au moins 100°C à 180°C.

**7.** Procédé selon l'une quelconque des revendications 1 à 6, **caractérisé en ce que** la pression de polymérisation est comprise entre 2 bars et 20 bars.

**8.** Procédé selon l'une quelconque des revendications 1 à 7, **caractérisé en ce que** l'on dispose, dans le récipient de polymérisation, le mélange de polymérisation, à une température inférieure à 100°C, que l'on règle, à cette température, une pression supérieure à la pression de la vapeur du mélange de polymérisation, et que l'on chauffe ensuite le récipient de polymérisation fermé à la température de polymérisation qui est supérieure à 100°C, puis que l'on procède à la polymérisation.

**9.** Polymères P sous forme de particules que l'on peut obtenir au moyen du procédé selon les revendications 1 à 8.

**10.** Matières à mouler thermoplastiques F contenant, en tant que composants, par rapport à F,

P) les polymères P sous forme de particules selon la revendication 9, à raison de 1% à 99% en poids,
M) un polymère de matrice M thermoplastique présentant une température de transition vitreuse Tg supérieure à 25°C, à raison de 1% à 99% en poids,
E) un composant élastomère E constitué d'un polymère à élasticité caoutchouteuse présentant une température de transition vitreuse Tg inférieure à 0°C, à raison de 0% à 70% en poids, et
P) des adjuvants classiques Z, à raison de 0% à 50% en poids.

**11.** Procédé de préparation des matières à mouler thermoplastiques F selon la revendication 10, **caractérisé en ce que** l'on mélange, dans un dispositif de mélange approprié, les composants P et M ainsi que - à condition qu'ils soient présents - E et Z, et **caractérisé en ce qu'**on les soumet à un traitement, à des températures appropriées, pour obtenir une matière à mouler.

**12.** Mise en oeuvre des polymères P sous forme de particules selon la revendication 9, en tant qu'adjuvant pour améliorer la résistance aux chocs, dans les matières à mouler thermoplastiques.

**13.** Mise en oeuvre des matières à mouler thermoplastiques F selon la revendication 10, pour la préparation de corps moulés et de feuilles.

**14.** Corps moulés et feuilles constitués à partir des matières à mouler thermoplastiques F selon la revendication 10.